# EUROPEAN PATENT SPECIFICATION

(11) **EP 4 152 455 B1**
(45) Date of publication and mention of the grant of the patent: **31.12.2025**
(21) Application number: 22195484.5
(22) Date of filing: 14.09.2022
(51) Int. Cl.: H01M 10/04, H01M 50/46, H01M 10/0583

(54) **ELECTRODE ASSEMBLY FOR USE IN A BATTERY, APPARATUS FOR MANUFACTURING THE SAME AND METHOD FOR MANUFACTURING THE SAME**
ELEKTRODENANORDNUNG ZUR VERWENDUNG IN EINER BATTERIE, VORRICHTUNG ZUR HERSTELLUNG DAVON UND VERFAHREN ZUR HERSTELLUNG DAVON
ENSEMBLE D'ÉLECTRODES DESTINÉ À ÊTRE UTILISÉ DANS UNE BATTERIE, APPAREIL DE FABRICATION DE CELUI-CI ET SON PROCÉDÉ DE FABRICATION

(30) Priority: 16.09.2021 KR 20210124050; 16.09.2021 KR 20210124049; 16.09.2021 KR 20210124051
(43) Date of publication of application: 22.03.2023
(73) Proprietor: LG Energy Solution, Ltd., Seoul 07335 (KR)
(72) Inventor: KIM, Jin Gon, Daejeon 34122 (KR); LEE, Byeong Kyu, Daejeon 34122 (KR); JUNG, Su Taek, Daejeon 34122 (KR)
(74) Representative: Goddar, Heinz J.

(56) References cited:
- EP-A2- 1 261 063
- CN-A- 112 259 802
- KR-A- 20120 060 325
- KR-A- 20200 023 854

## Description

### TECHNICAL FIELD

The present disclosure relates to an electrode assembly for use in a battery, an apparatus for manufacturing the same and a method for manufacturing the same, and more particularly, to an electrode assembly for use in battery in which electrodes and a separator sheet are stacked in a Z-folding (or zigzag-folding) type, an apparatus for manufacturing the same and a method for manufacturing the same.

### BACKGROUND

Generally, the types of secondary batteries (rechargeable batteries) include nickelcadmium batteries, nickel-hydrogen batteries, lithium-ion batteries, lithium-ion polymer batteries, and the like. Such secondary batteries are applied and used not only to/in small-sized products such as digital cameras, P-DVD, MP3P, cellular phones, PDA, portable game devices, power tools and E-bikes, but also to/in large-sized products demanding high output such as electric and hybrid vehicles, and a power storage device for storing surplus generated power or new renewable energy and a backup power storage device.

In order to manufacture such a secondary battery, first, an electrode active material slurry may be applied to a cathode current collector and an anode current collector to prepare a cathode and an anode, which may be stacked on both sides (opposite sides) of a separator, thereby forming an electrode assembly having a predetermined shape. Then, the electrode assembly may be housed in a battery case, and an electrolytic solution may be injected and the housing may then be sealed, e.g. to form a battery cell.

Electrode assemblies may be classified into various types. For example, there may be mentioned a simple stack type in which cathodes, separators, and anodes simply cross (or are overlapped) with each other and they are continuously stacked without manufacturing a unit cell, a lamination & stack type (L&S type) in which unit cells (e.g. elementary or fundamental battery units comprising a cathode, a separator and an anode) are first manufactured using cathodes, separators, and anodes, and then these unit cells are stacked, a stack & folding type (S&F type) in which a plurality of unit cells are spaced apart and attached to a surface of a separator sheet having a long length (e.g. an elongated or strip-like separator sheet), and the separator sheet is repeatedly folded (or rolled) in the same direction from one end, a Z-folding type (zigzag-folding type) in which a plurality of electrodes or unit cells are alternately attached to a surface and the other (opposite) surface of a separator sheet whose length is long on one side (e.g. an elongated or strip-like separator sheet), and the separator sheet is repeatedly and alternately folded in a specific direction from one end and then folded in the opposite direction (e.g. such that the separator sheet assumes a zigzag or meandering shape), and the like. Among them, the Z-folding type has high alignment degree and impregnation degree of the electrolytic solution, and thus is often used in recent years.

Conventionally, however, after the electrodes and the separator sheet are stacked in this Z-folding type, no additional lamination process is performed, which may cause a problem that the electrodes and the separator sheet do not (or not sufficiently) adhere to each other and thus, the electrodes may be offset or displaced from a target position. To solve this problem, an additional lamination process may be performed after stacking the electrodes and the separator sheet, but the overall thickness of the stacked body in which the electrodes and the separator sheet are stacked may be large, which may cause a problem that heat is not transferred to the interior of the stacked body, and thus the adhesive strength may be lowered. Additionally, in order to perform such an additional lamination process, there may also be a problem that the electrodes may be offset or displaced from the target position in the process of transferring the stacked body. This problem may be aggravated further depending on the material of the separator sheet when the adhesive strength of the separator sheet itself is low.

Therefore, there is a need to develop a Z-folding type electrode assembly for use in a battery (e.g. in a battery cell) having improved battery cell performance, while preventing the electrodes from being offset or displaced from a target position, an apparatus for manufacturing the same, and a method for manufacturing the same.

KR 2020 0023854 A discloses an apparatus for manufacturing an electrode assembly comprising a pair of electrode supply units, a separator supply unit and a rotatable stacking table. The stacking table is provided with a lamination unit for attaching electrodes arranged on the stacking table to a heated separator sheet.

KR 2012 0060325 A, CN 112 259 802 A and EP 1 261 063 A2 disclose apparatuses for manufacturing an electrode assembly comprising adhesive applicators for applying an adhesive to a separator sheet for the electrode assembly.

### SUMMARY OF THE DISCLOSURE

### TECHNICAL PROBLEM

It is an object of the present disclosure to provide an electrode assembly for use in a battery in which electrodes and a separator sheet are stacked in a Z-folding type, and the electrodes can be prevented from being offset or displaced from a target position, an apparatus for manufacturing the same and a method for manufacturing the same.

The objects of the present disclosure are not limited to the aforementioned object, and other objects which are not described herein should be clearly understood by those skilled in the art from the following detailed description and the accompanying drawings.

### TECHNICAL SOLUTION

This object is met by an apparatus for manufacturing an electrode assembly for use in a battery according to claim 1, a method of manufacturing an electrode assembly for use in a battery according to claim 9, an electrode assembly according to claim 13 and a battery cell according to claim 15. Examples thereof are detailed in the dependent claims.

The present disclosure provides an apparatus for manufacturing an electrode assembly for use in a battery (e.g. in a battery cell), in particular in a secondary battery (e.g. in a battery cell of or for use in a secondary battery).

The apparatus comprises a first electrode supply unit configured to provide (or supply) a plurality of (individual or separate) first electrodes, e.g. cathodes or anodes. The first electrode supply unit may for example be configured to provide the first electrodes from a first electrode sheet (e.g. a continuous first electrode sheet). The first electrode supply unit may e.g. be or comprise a first electrode reel, from which the first electrode sheet may be unwound. In some examples, the first electrode supply unit may be configured to cut the first electrodes from the first electrode sheet. Additionally or alternatively, the first electrode supply unit may e.g. be configured to provide the first electrodes from a supply of pre-formed electrodes such as a stack of pre-formed first electrodes. The first electrode supply unit may be configured to arrange (e.g. place or seat) one or more first electrodes on a stacking table, e.g. as described below.

The apparatus further comprises a second electrode supply unit configured to provide (or supply) a plurality of (individual or separate) second electrodes, e.g. of an opposite polarity as the first electrodes, i.e. anodes and cathodes, respectively. The second electrode supply unit may be embodied as or similar to the first electrode supply unit and may e.g. be configured to provide the second electrodes from a second electrode sheet (which may e.g. be unwound from a second electrode reel) or a second electrode stack.

The apparatus further comprises a separator supply unit configured to provide (or supply) a continuous separator sheet, for example to advance or move the separator sheet (e.g. a front end or front portion thereof) towards a stacking table as described below. The separator supply unit may for example be or comprise a separator reel, from which the separator sheet may be unwound. The separator supply unit may e.g. be configured to unwind the separator sheet from the separator reel and to advance the separator sheet from the separator reel towards the stacking table. The continuous separator sheet may have a length that is much larger than a length or physical dimension of the first and second electrodes, e.g. at least five times, in some examples at least ten times, in one example at least twenty times the length of physical dimension of the first and second electrodes. Put differently, the continuous separator sheet may not be cut or otherwise formed or shaped into a specific shape or form (e.g. to match a physical dimension of the electrodes) along its length, but may e.g. be a single continuous piece of material. The separator sheet may be configured to be folded and may e.g. comprise or consist of a flexible material. The separator sheet may be configured to physically separate and electrically insulate electrodes from each other and may e.g. comprise or consist of an electrically insulating material. The separator sheet may be configured to accommodate an electrolytic solution and may e.g. comprise or consist of porous material.

The apparatus further comprises a stacking table for stacking the first and second electrodes thereon with the separator sheet folded between the first and second electrodes to form the electrode assembly. The stacking table may for example comprise a surface (e.g. an upper or top surface) on which the first and second electrodes and the separator sheet can be arranged (e.g. placed or seated on).

The stacking table is configured to rotate back and forth (e.g. to perform a reciprocating rotating motion) between the first electrode supply unit and the second electrode supply unit (e.g. between an electrode placement device of the first electrode supply unit and an electrode placement device of the second electrode supply unit). The stacking table may for example be configured to rotate between a first configuration or orientation in which the stacking table (e.g. said surface thereof) is adjacent to (e.g. faces) the first electrode supply unit (e.g. the electrode placement device thereof) and a second configuration or orientation in which the stacking table (e.g. said surface thereof) is adjacent to (e.g. faces) the second electrode supply unit (e.g. the electrode placement device thereof). The stacking table may for example be configured to rotate by at least 45°, in some examples by at least 75°, in some examples by at least 90°, in one example by at least 120° and in one example by at least 180°. In some examples, the stacking table may also be configured to move (or translate) linearly along a first direction in addition to the rotation, wherein the first direction may e.g. be at an angle and in particular perpendicular (for example at an angle between 75° and 105°, in some examples between 85° and 95°) to a rotation axis of the stacking table and/or may be a horizontal direction (e.g. perpendicular to a direction of gravity). The stacking table may for example be configured to move back and forth between the first and second electrode supply units along the first direction.

The apparatus further comprises a separator guide configured to guide the folding (e.g. a folding direction) of the separator sheet. The separator guide may for example be configured to guide the folding of the separator sheet by controlling a position of the separator sheet (e.g. a position at which the separator sheet is provided or supplied by or from the separator supply unit) relative to the stacking table. The separator guide may comprise one or more guiding surfaces configured to come in contact with the separator sheet to guide the folding, e.g. a pair of opposing guiding surfaces between which the separator sheet may be arranged. The separator guide may for example comprise one or more guiding rollers (or rolls), e.g. a pair of guiding rollers between which the separator sheet may be arranged. The separator guide and the stacking table may be configured to move relative to each other (e.g. by moving one or both of the separator guide and the stacking table), for example along the first direction and/or by rotating the stacking table, e.g. to perform the folding of the separator sheet on the stacking table.

The first and second electrode supply units may be configured to alternately arrange (e.g. place or seat) first and second electrodes (e.g. electrodes of different polarity) on the stacking table, for example to form a stack in which first and second electrodes are arranged alternately (i.e. a second electrode on top of a first electrode, another first electrode on top of the second electrode and so on or vice-versa). The separator guide may guide the folding of the separator sheet such that the separator sheet is folded between the first and second electrodes. The separator guide may guide the folding of the separator sheet such that the separator sheet is folded in a zigzag or meandering shape (Z-folding), e.g. such that the separator sheet extends from left to right between a first electrode and a second electrode and from right to left between said second electrode and another first electrode arranged on said second electrode and so on. Preferably, the separator sheet is folded without cutting the separator sheet, i.e. such that the separator sheet remains a continuous sheet.

The apparatus further comprises a first adhesive applicator that is configured to apply (e.g. deposit or coat) an adhesive to (e.g. on) at least a part of the separator sheet located between the separator guide and the stacking table. Additionally, the first adhesive applicator may be configured to apply the adhesive to a first electrode arranged on the stacking table (e.g. arranged on a surface of the stacking table or on a portion of the separator sheet arranged on the stacking table) and/or a second electrode arranged on the stacking table. The first adhesive applicator may for example be or comprise a nozzle and/or a dispenser (which may also be referred to as an upper nozzle or dispenser). The first adhesive applicator may be configured to apply the adhesive by spraying, dispensing and/or otherwise depositing the adhesive, e.g. at/on a surface of the respective object. The first adhesive applicator may for example be configured to apply the adhesive to portions or regions of the separator sheet that an electrode (e.g. a first electrode) is to be arranged on and/or covered with.

**In** some examples, the apparatus may further comprise a second adhesive applicator configured to apply an adhesive to at least a part of the separator sheet located between the separator guide and the stacking table and/or to a first electrode arranged on the stacking table and/or a second electrode arranged on the stacking table. Put differently, the apparatus may comprise a pair of adhesive applicators, e.g. a pair of (upper) nozzles. The second adhesive applicator may be embodied as described above for the first adhesive applicator. The second adhesive applicator may for example be configured to apply the adhesive to portions or regions of the separator sheet that an electrode (e.g. a second electrode) is to be arranged on and/or covered with.

The separator guide may be configured to guide the separator sheet such that the first and second adhesive applicators are arranged on opposite sides of the separator sheet (e.g. along the first direction). The first adhesive applicator may be configured to apply the adhesive to a first surface of the separator sheet and/or to an electrode (e.g. a first electrode) arranged on said first surface. The second adhesive applicator may be configured to apply the adhesive to a second surface of the separator sheet opposite to the first surface and/or to an electrode (e.g. a second electrode) arranged on said second surface. The first and second adhesive applicators may for example be arranged on opposite sides of the separator guide, e.g. such that the separator guide is arranged between (for example interposed between) the first and second adhesive applicators.

In some examples, the first electrode supply unit may be configured to arrange a first electrode on a first portion (e.g. on a first region) of the separator sheet. The second electrode supply unit may be configured to arrange a second electrode on a second portion (e.g. on a second region) of the separator sheet. The second portion may be adjacent to (e.g. adjoin or border) the first portion. The second portion may be arranged upstream or downstream of the first portion along the length of the separator sheet, e.g. such that the first portion is arranged on the stacking table before the second portion or vice-versa.

The first adhesive applicator may be configured to apply the adhesive to at least a part of said second portion of the separator sheet (e.g. prior to the second electrode being arranged thereon) and/or to said first electrode arranged on said first portion of the separator sheet.

The second adhesive applicator may be configured to apply the adhesive to at least a part of said first portion of the separator sheet (e.g. prior to the first electrode being arranged thereon) and/or to said second electrode arranged on said second portion of the separator sheet.

The first adhesive applicator may be configured to apply the adhesive to said part of the second portion of the separator sheet while the first electrode supply unit arranges the first electrode on said first portion of the separator sheet. Put differently, the first adhesive applicator and the first electrode supply unit may be configured to apply the adhesive to the second portion and to arrange the first electrode on the first portion simultaneously at least in part. For example, the first adhesive applicator may be configured to move along (e.g. across) the second portion (which may be located between the separator guide and the stacking table at this point) to apply the adhesive thereon while the first electrode is being arranged on the first portion (which may already be arranged on the stacking table at this point in time).

Additionally or alternatively, the second adhesive applicator may be configured to apply the adhesive to said part of the first portion of the separator sheet while the second electrode supply unit arranges the second electrode on said second portion of the separator sheet, e.g. as described above for the first adhesive applicator.

Preferably, some or all of the separator guide, the first adhesive applicator and the second adhesive applicator are configured to move back and forth (e.g. to reciprocate or perform a reciprocating linear motion or translation) between the first electrode supply unit and the second electrode supply unit along the first direction different from (e.g. at an angle to, in particular perpendicular to) a rotation axis of the stacking table. The motion of the respective elements may be along a straight path or line (e.g. only along the first direction) and/or may be along a curved path (e.g. at least in part also along a second direction perpendicular to the first direction). The respective elements may in particular be configured to move while the stacking table is rotating. The separator guide may for example be configured to move along the first direction to guide the folding of the separator sheet. The adhesive applicators may for example be configured to move along the first direction for (e.g. while) applying the adhesive. In some examples, some or all of the separator guide, the first adhesive applicator and the second adhesive applicator may be fixed relative to each other. The separator guide, the first adhesive applicator and/or the second adhesive applicator may e.g. be mounted in or on a common carriage configured to move along the first direction.

As used herein, the first direction may for example be a direction that is different from a stacking direction of the electrode assembly (e.g. different from a normal direction of a surface of the stacking table that the electrodes are stacked on), for example a direction that is tilted or inclined (e.g. at an angle) with respect to the stacking direction, in particular a direction that is perpendicular to the stacking direction (e.g. at an angle between 75° and 105° to the stacking direction, in some examples between 85° and 95° to the stacking direction, in one example 90° to the stacking direction). Additionally or alternatively, the first direction may for example also be a direction extending between different parts of the apparatus such as between the first and second electrode supply units or parts thereof, e.g. between an electrode placement device of the first electrode supply unit and an electrode placement device of the second electrode supply unit. In some examples, the first direction may be horizontal or substantially horizontal (e.g. at an angle of between 75° and 105° to a direction of gravity).

One or both of the first adhesive applicator and the second adhesive applicator may be configured to apply the adhesive while (e.g. at the same time or simultaneously at least in part) the separator guide and/or the respective adhesive applicator moves along the first direction from the stacking table, e.g. towards one of the first and second electrode supply units. For example, the first adhesive applicator may be configured to apply the adhesive while the separator guide and/or the first adhesive applicator move towards the second electrode supply unit (e.g. to allow for the stacking table to also rotate towards the second electrode supply unit). Additionally or alternatively, the second adhesive applicator may be configured to apply the adhesive while the separator guide and/or the second adhesive applicator move towards the first electrode supply unit (e.g. to allow for the stacking table to also rotate towards the first electrode supply unit).

In some examples, the separator guide may be configured to, when (e.g. after or in response to) a first or second electrode has been arranged on a portion of the separator sheet and the first and second adhesive applicator, respectively, has applied the adhesive to at least a part of an adjacent portion of the separator sheet and/or to said electrode arranged on the separator sheet, move along the first direction to cover said electrode arranged on the separator sheet with said adjacent portion of the separator sheet. In other words, the separator guide may be configured to wait for the application of the adhesive to be completed before folding the separator sheet over said electrode.

The first adhesive applicator and/or the second adhesive applicator each may be configured to rotate for orienting the respective adhesive applicator (e.g. a nozzle thereof) relative to the separator sheet and/or to stacking table. The first adhesive applicator and/or the second adhesive applicator may in particular be configured to rotate around a rotation axis that is parallel to the rotation axis of the stacking table. The first adhesive applicator and/or the second adhesive applicator may for example be configured to orient themselves for maintaining an angle between the respective adhesive applicator and the separator sheet, in particular a portion thereof that the adhesive is to be or being applied to, e.g. while the stacking table and/or the separator guide are moving. The first adhesive applicator and/or the second adhesive applicator may for example be configured to orient themselves such that the an outlet of the respective adhesive applicator (e.g. a nozzle thereof) is or remains perpendicular (e.g. between 75° and 105°, in some example between 85° and 95°) to a surface of the separator sheet.

Additionally or alternatively, the first adhesive applicator and/or the second adhesive applicator each may be configured move along the first direction and/or along a second direction that is different from (e.g. an angle to, in particular perpendicular to) the first direction and the rotation axis of the stacking table (e.g. in vertical direction) for adjusting a distance between the respective nozzle and the separator sheet and/or a distance between the respective nozzle and the stacking table. The first adhesive applicator and/or the second adhesive applicator may for example be configured to move along the first and/or second directions for maintaining said distance(s), e.g. while the stacking table and/or the separator guide are moving.

In some examples, the apparatus may further comprise one or more bottom-side applicators configured to apply an adhesive to a (first) surface of a first electrode and/or a second electrode. Said first surface may be to face the stacking table when the respective electrode is arranged thereon and may thus also be referred to as a bottom surface. The bottom-side applicators may be configured to apply the adhesive prior to the respective electrode being arranged on the separator sheet. The bottom-side applicators may for example be or comprise a nozzle and/or a dispenser (which may also be referred to as a lower nozzle or dispenser).

The first electrode supply unit and/or the second electrode supply unit may each comprise an electrode placement device (e.g. an electrode placement head or header) that is configured to hold (e.g. adsorb or grab) a first and second electrode, respectively, and to place (e.g. seat) said electrode on the stacking table. One or more of said one or more bottom-side applicators may be configured to apply the adhesive to the bottom surface of said electrode while the electrode is being held by said electrode placement device.

Additionally or alternatively, the first electrode supply unit and/or the second electrode supply unit may each comprise a transfer device (e.g. a roller conveyer, a conveyer belt and/or a moving floor) configured to transfer a first and second electrode, respectively, on a transfer surface of said transfer device towards the stacking table and/or towards an electrode placement device. Said transfer surface may comprise one or more openings (e.g. holes, cutouts, slits and/or grooves). One or more of said one or more bottom-side applicators may be configured to apply the adhesive to the bottom surface of said electrode through said one or more openings.

In some examples, the first adhesive applicator and/or the second adhesive applicator may be configured to apply the adhesive uniformly (e.g. to spread the adhesive homogeneously over the respective object). Preferably, the first adhesive applicator and/or the second adhesive applicator is/are configured to apply the adhesive selectively, in particular by applying a plurality of spots of the adhesive and/or a plurality of lines of the adhesive, e.g. as detailed below for the electrode assembly according to the present disclosure.

In specific examples, the first adhesive applicator and/or the second adhesive applicator may be configured to apply the respective adhesive such that a diameter of an individual spot (or an individual dot) of the plurality of spots (or dots) of the respective adhesive and/or an individual line of the plurality of lines of the respective adhesive is between 300 µm and 3000 µm, or particularly between 400 µm and 2000 µm, or more particularly between 500 µm and 1200 µm. Additionally or alternatively, the first adhesive applicator and/or the second adhesive applicator may be configured such that the respective adhesive to occupies 0.01% to 50%, particularly 0.05% to 30%, and more particularly 0.08% to 1% of a total area of the respective adjacent electrode in a plan view (i.e., normal to the respective adjacent electrode).

In some examples, the apparatus may be configured to execute some or all of the steps of a method of manufacturing an electrode assembly according to any one of the examples disclosed herein. The apparatus may for example comprise a controller configured to control some or all of the components of the apparatus such as the first and second electrode supply units, the separator supply unit, the stacking table, the separator guide and the first and second adhesive applicators to execute the respective steps. The controller may be implemented in hardware, software or a combination thereof and may for example comprise a processor and a storage device storing instructions for execution by the processor to provide the respective functionality.

In some examples, the first electrode supply unit may be or comprise a first electrode reel on which a first electrode sheet having a plurality of first electrodes formed thereon is unwound. In some examples, the second electrode supply unit may be or comprise a second electrode reel on which a second electrode sheet having a plurality of second electrodes formed thereon is unwound. In some examples, the separator supply unit may be or comprise a separator reel in which a separator sheet that is folded when the first electrode and the second electrode are seated, covers the electrodes and is stacked with the electrodes is unwound. In some examples, the stacking table may be or comprise a table on which the first electrode, the second electrode and the separator sheet are seated on the upper surface. In some examples, the separator guide may guide a folding direction of the separator sheet. In some examples, the first adhesive applicator may be or comprise a pair of upper nozzle that apply an adhesive to at least a part of the separator sheet located between the table and the separator guide. In some examples, the table may perform a reciprocating rotating motion between the first electrode reel and the second electrode reel. In some examples, the separator guide and the pair of upper nozzles may linearly reciprocate left and right on the basis of the table.

The present disclosure further provides a method of manufacturing an electrode assembly for use in a battery. The method may for example be executed with an apparatus for manufacturing an electrode assembly according to any one of the examples disclosed herein, but is not limited thereto and may also be executed with other suitable apparatuses.

The method comprises arranging a first portion of a continuous separator sheet on a stacking table, e.g. on a surface of the stacking table or on an electrode (e.g. a second electrode) arranged on the stacking table (e.g. on another portion of the separator sheet that is already arranged on the stacking table). The first portion of the separator sheet may be provided by a separator supply unit, e.g. as described above, for example by advancing the separator sheet towards the stacking table and/or a separator guide. In some examples, the separator sheet may be unwound from a separator reel (e.g. along or through the separator guide). The first portion of the separator sheet may be arranged on the stacking table using said separator guide (e.g. as described above), for example by moving the stacking table and the separator guide relative to each other to fold or place the first portion of the separator sheet on the stacking table, e.g. by rotating the stacking table and/or by moving the separator guide along the first direction as described above.

The method further comprises arranging a first electrode on said first portion of the separator sheet using a first electrode supply unit, e.g. such that a first or bottom surface of the first electrode faces and/or is in contact with the first portion of the separator sheet. This may for example comprise placing the first electrode on the first portion using an electrode placement device of the first electrode supply unit. This may further comprise picking up or grabbing the first electrode with the electrode placement device, e.g. from an electrode stack or from a transfer device. In some examples, this may also comprise forming the first electrode, for example by cutting a first electrode sheet, wherein the first electrode sheet may e.g. be unwound from a first electrode reel.

The method further comprises applying an adhesive to at least a part of a second portion of said separator sheet (e.g. to a surface thereof that is to face or cover the first electrode) and optionally to said first electrode (for example to a second (e.g. top or exposed) surface thereof that is to face or be covered by the second portion of the separator sheet) using a first adhesive applicator (e.g. a first (upper) nozzle or dispenser). The adhesive may be applied (e.g. sprayed, dispensed or otherwise deposited) uniformly or preferably selectively, e.g. in a plurality of spots and/or lines as described below for the electrode assembly according to the present disclosure. The adhesive may be applied while moving the first adhesive applicator along (e.g. across) the second portion and/or the first electrode, e.g. by moving the first adhesive applicator along the first direction. The adhesive is applied while and optionally prior to and/or after arranging the first electrode on the first portion of the separator sheet. The second portion may be adjacent to (e.g. border or adjoin) the first portion, for example as described above. The second portion may be arranged upstream of the first portion along the length of the separator sheet.

The method further comprises folding said separator sheet to cover said first electrode arranged on the first portion with said second portion of the separator sheet, e.g. such that the second portion extends parallel to the first portion. The first electrode is covered with the second portion such that the adhesive is arranged between (e.g. in contact with both of) said first electrode (e.g. the second surface thereof) and said second portion. The separator sheet is folded using the separator guide to guide the separator sheet, e.g. by moving the stacking table and the separator guide relative to each other, for example by rotating the stacking table and/or moving the separator guide along the first direction.

While applying the adhesive and/or while folding said separator sheet, the stacking table is rotated from the first electrode supply unit towards a second electrode supply unit for providing a second electrode (e.g. simultaneously at least in part). The stacking table may for example perform a reciprocating rotating motion between the first and second electrode supply units (e.g. the electrode reels and/or electrode placement devices thereof). For example, the first electrode may be arranged on the first portion of the separator sheet while the stacking table is in a first configuration or orientation in which the stacking table is adjacent to (e.g. faces) the first electrode supply unit (e.g. an electrode placement device thereof). While applying the adhesive and/or while folding the separator sheet, the stacking table may be rotated towards or to a second configuration or orientation in which the stacking table is adjacent to (e.g. faces) the second electrode supply unit (e.g. an electrode placement device thereof). Thereby, the method according to the present disclosure may improve speed and efficiency of the manufacturing process.

In some examples, the method may further comprise arranging a second electrode on said second portion of the separator sheet using the second electrode supply unit, in particular after folding said separator sheet to cover said first electrode. The second electrode may be arranged on the second portion as described above for arranging the first electrode on the first portion, e.g. by cutting a second electrode sheet unwound from a second electrode reel, picking up the second electrode with an electrode placement device and/or placing the second electrode on the second portion using the electrode placement device. The first and second electrodes and the first and second portions of the separator sheet may form a unit cell of the electrode assembly, e.g. an elementary structure that can be arranged (e.g. stacked) repeatedly to form the electrode assembly.

The method may further comprise applying an adhesive to at least a part of a third portion of said separator sheet (e.g. to a surface thereof that is to face or cover the second electrode) and/or to said second electrode (for example to a second (e.g. top or exposed) surface thereof that is to face or be covered by the third portion of the separator sheet) using a second adhesive applicator (for example a second (upper) nozzle or dispenser), e.g. as described above for applying the adhesive using the first adhesive applicator. The adhesive may be applied prior to, while and/or after arranging the second electrode on the second portion of the separator sheet. The third portion may be adjacent to (e.g. border or adjoin) the second region. The third portion may be arranged upstream of the second portion along the length of the separator sheet. In some examples, the first and third portion of the separator sheet may collectively be referred to or be part of a first region of the separator sheet (e.g. a first region on which first electrodes are to be arranged on).

The method may also comprise folding said separator sheet to cover said second electrode arranged on the second portion with said third portion of the separator sheet, e.g. as described above for folding the separator sheet to cover the first electrode. For covering the second electrode, the separator sheet may be folded in an opposite direction as for covering the first electrode, e.g. such that the separator sheet assumes as zigzag or meandering shape. The separator sheet may be folded such that the adhesive is arranged between (e.g. in contact with both of) said second electrode (e.g. the second surface thereof) and said third portion. The separator sheet may be folded using the separator guide to guide the separator sheet, e.g. as described above.

Preferably, the stacking table is rotated from the second electrode supply unit towards the first electrode supply unit while (e.g. simultaneously at least in part) applying the adhesive using the second adhesive applicator and/or while (e.g. simultaneously at least in part) folding said separator sheet to cover said second electrode. The stacking table may for example be rotated from the second configuration or orientation back towards or to the first configuration or orientation.

In some examples, the method may comprise moving some or all of the separator guide, the first adhesive applicator and the second adhesive applicator between the first electrode supply unit and the second electrode supply unit along the first direction different from (e.g. perpendicular to) the rotation axis of the stacking table. The respective elements may for example (linearly) reciprocate relative to (e.g. on the basis of) the stacking table, e.g. left and right along the first direction. The respective elements may be moved simultaneously, e.g. in a common carriage as described above. The respective elements may in particular be moved while rotating the stacking table. The respective elements may for example be moved for arranging or folding portions of the separator sheet on the stacking table and/or for applying the adhesive.

For example, the adhesive applied using the first adhesive applicator may be applied while the separator guide and/or the first adhesive applicator move towards the second electrode supply unit (e.g. to allow for also rotating the stacking table towards the second electrode supply unit). Additionally or alternatively, the adhesive applied using the second adhesive applicator may be applied while the separator guide and/or the second adhesive applicator move towards the first electrode supply unit (e.g. to allow for also rotating the stacking table towards the first electrode supply unit).

In some examples, the first electrode may be arranged on the first portion of the separator sheet while applying the adhesive to said part of the second portion of the separator sheet (e.g. simultaneously at least in part). For example, while the first electrode is being arranged on the first portion, the first adhesive applicator may move along the second portion of the separator sheet (e.g. towards the second electrode supply unit) and apply the adhesive to the second portion. Additionally or alternatively, the second electrode may be arranged on the second portion of the separator sheet while applying the adhesive to said part of the third portion of the separator sheet. ). For example, while the second electrode is being arranged on the second portion, the first adhesive applicator may move along the third portion of the separator sheet (e.g. towards the first electrode supply unit) and apply the adhesive to the third portion.

In some examples, the method may comprise applying an adhesive to a (first) surface of the first electrode and/or a (first) surface of the second electrode, in particular prior to arranging the respective electrode on the first and second portion, respectively, of the separator sheet with said first surface facing the first and second portion, respectively, of the separator sheet. The first surface may thus also be referred to as a bottom surface (or lower surface or region) of the respective electrode. The adhesive may for example be applied to the first surface of the respective electrode using a bottom-side applicator as described above.

The method may further comprise rotating the first adhesive applicator (e.g. a nozzle thereof) and/or the second adhesive applicator (e.g. a nozzle thereof) to orient the respective adhesive applicator (e.g. an outlet or end part of the respective nozzle) relative to the separator sheet and/or to the stacking table, for example as part of the respective step of applying the adhesive. The respective adhesive applicator may for example be oriented to maintain an angle between the respective adhesive applicator and the separator sheet (e.g. a portion thereof that the adhesive is to be or being applied to), for example as described above for the apparatus according to the present disclosure. The respective adhesive applicator may for example perform a rotational motion in a direction towards or adjacent to the separator sheet.

Additionally or alternatively, the method may also comprise moving the first adhesive applicator and/or the second adhesive applicator in a direction different from (in particular perpendicular to) the rotation axis of the stacking table (e.g. along the first direction and/or along a second direction perpendicular to the first direction) to adjust a distance between the respective adhesive applicator and the separator sheet and/or a distance between the respective adhesive applicator and the stacking table, for example as part of the respective step of applying the adhesive. The respective adhesive applicator may for example be moved to maintain said distance, for example as described above for the apparatus according to the present disclosure.

The method may further comprise repeatedly executing some or all of the steps described above (e.g. arranging a first/second electrode, applying the adhesive and folding the separator sheet to cover the respective electrode), for example to stack a plurality of first and second electrodes on the stacking table with the separator sheet folded or interposed therebetween, e.g. in a zigzag shape (Z-type folding arrangement). In some examples, the method may further comprise arranging or integrating the electrode assembly in/into a battery cell, e.g. by housing the electrode assembly in a battery case with an electrolytic solution. This may comprise dissolving the adhesive in the electrolytic solution at least in part, e.g. by application of pressure and/or heat.

In some examples, the method may comprise cutting a first electrode sheet unwound from a first electrode reel to form a plurality of first electrodes. In some examples, the step of arranging said first portion of the separator sheet may be or comprise seating the separator sheet unwound from a separator reel on a table along a separator guide. In some examples, the method may comprise applying an adhesive to a lower portion of the first electrode from a lower nozzle. In some examples, the step of arranging the first electrode on said first portion of the separator sheet may be or comprise seating the first electrode on a first region of the separator sheet. In some examples, the step of applying said adhesive to said part of the second portion of the separator sheet and/or to said first electrode may be or comprise applying the adhesive to at least a part of a second region of the separator sheet from a first upper nozzle. In some examples, the step of folding said separator sheet to cover said first electrode may be or comprise folding the separator sheet in a folding direction guided by the separator guide, so that the second region of the separator sheet applied with the adhesive covers the first electrode.

The present disclosure further provides an electrode assembly for use in a battery (e.g. in a battery cell), in particular in a secondary battery (e.g. in a battery cell of or for use in a secondary battery). The electrode assembly comprises a plurality of first electrodes (e.g. cathodes or anodes) and a plurality of second electrodes (e.g. anodes and cathodes, respectively). The first and second electrodes are alternately stacked (e.g. a first electrode, then a second electrode, then another first electrode, then another second electrode and so on).

The first and second electrodes are separated from each other by a separator sheet that is folded between the first and second electrodes in a zigzag shape (Z-type folding). The separator sheet may be a single continuous sheet. The separator sheet may be folded such that each pair of adjacent electrodes (e.g. a first electrode and a second electrode arranged on the first electrode or vice-versa) are separated from each other by a respective portion of the separator sheet arranged or interposed therebetween.

An adhesive is arranged between the separator sheet and the first electrodes and/or between the separator sheet and the second electrodes. The adhesive may for example be arranged between a first electrode and a respective (first) portion of the separator sheet that said first electrode is arranged on and/or between said first electrode and a respective (second) portion of the separator sheet that covers said first electrode. Additionally or alternatively, the adhesive may for example be arranged between a second electrode and a respective (second) portion of the separator sheet that said second electrode is arranged on and/or between said second electrode and a respective (third) portion of the separator sheet that covers said second electrode.

The adhesive is arranged in a plurality of spots and/or lines. Put differently, the adhesive is not applied uniformly between some or all of the electrodes and the corresponding portions of the separator sheet, but is applied selectively in said plurality of spots (e.g. dots) and/or lines. The spots and/or lines may be separated from each other by portions or regions in which no adhesive is arranged. The spots and/or lines may be arranged in a regular pattern, e.g. in a regular grid (for example an equidistant and/or rectangular grid).

For some or all of the first and second electrodes, the adhesive is arranged in between 5 and 20 lines between a surface of the respective electrode and the separator sheet (e.g. a portion of the separator sheet that said electrode is arranged on or covered with) and/or in between 10 and 200 spots between a surface of the respective electrode and the separator sheet (e.g. a portion of the separator sheet that said electrode is arranged on or covered with).

For some or all of the first and second electrodes, the adhesive may for example cover between 0.01% and 50%, particularly between 0.05% and 30%, or more particularly between 0.08% and 1% of a cross-sectional area of a contact surface between the respective electrode and the separator sheet (e.g. a portion of the separator sheet that said electrode is arranged on or covered with). Alternatively or additionally, the adhesive may for example occupy between 0.01% and 50%, particularly between 0.05% and 30%, or more particularly between 0.08% and 1% of a total area of the respective (adjacent) electrode.

In some examples, at least some (in one example all) of said adhesive may have been arranged between the separator sheet and the first and/or second electrodes by applying the adhesive to a surface of the respective electrode prior to arranging said surface on the separator sheet and/or covering said surface with the separator sheet (e.g. prior to establishing contact between said electrode and the separator sheet). This may for example manifest in a lower degree of penetration of the adhesive into the separator sheet (e.g. a smaller amount of adhesive penetrating into the separator sheet and/or the adhesive penetrating to a smaller depth into the separator sheet). For example, the adhesive may entirely or primarily be present on an (outer) surface of the separator sheet that is in contact with the respective electrode. This may improve an adhesive strength between the separator sheet and the respective electrodes.

Additionally or alternatively, some or all of said adhesive may have been applied to the separator sheet prior to arranging or covering an electrode thereon/therewith. In one example, said adhesive was arranged between the separator sheet and the first and/or second electrodes by applying the adhesive to a first surface of the respective electrode prior to arranging said first surface on the separator sheet and by applying the adhesive to a portion of the separator sheet prior to covering a second surface of the respective electrode opposite to the first surface with said portion of the separator sheet.

The adhesive may be configured to be dissolved in an electrolytic solution for use in a battery cell. For example, the adhesive may be configured to be dissolved partially or entirely when coming in contact with the electrolytic solution. The adhesive may be configured to be dissolved in the electrolytic solution by application of heat and/or pressure. The adhesive may for example dissolve at a temperature between 0 °C and 300 °C, in some examples between 10 °C and 250 °C, or between 20 °C and 200 °C, or particularly at 70 °C ± 30 °C. The adhesive may for example dissolve at or near an atmospheric pressure and/or at an increased pressure, such as at a pressure between 500 hPa and 4000 hPa, in some examples between 900 hPa and 3500 hPa, or particularly between 1000 hPa and 3000 hPa.

The adhesive may for example be or comprise an acrylate-based adhesive. Additionally or alternatively, the adhesive may for example be or comprise an acrylate-based adhesive or acrylate-containing adhesive, such as PMA or MMA.

The electrolytic solution may for example comprise a carbonate-based solvent, such as DMC, EC or EMC.

In some examples, the electrode assembly may be obtainable (e.g. manufactured) by a method of manufacturing an electrode assembly for use in a battery according to any one of the examples described herein.

The present disclosure further provides a battery cell comprising an electrode assembly according to any one of the examples described herein and a battery case housing the electrode assembly together with an electrolytic solution. In some examples, the adhesive may have been dissolved in the electrolytic solution at least in part or entirely. Some or all of the dissolved adhesive may remain in the electrolytic solution. In the electrode assembly, traces (e.g. non-dissolved leftovers) of the adhesive or at least traces (e.g. indications) of the application of the adhesive may remain between the separator sheet and the first and/or second electrodes (for example modifications to a surface of the separator sheet).

### ADVANTAGEOUS EFFECTS

According to examples, the present disclosure provides an electrode assembly and a battery cell in which electrodes and a separator sheet are stacked in a Z-folding type, and an adhesive is (or has previously been) applied to the upper portion and lower portion of the electrodes, thereby preventing the electrodes from being offset or displaced from a target position. According to examples, the present disclosure further provides an apparatus for manufacturing the same and a method for manufacturing the same.

The effects of the present disclosure are not limited to the effects mentioned above and additional other effects not described above will be clearly understood from the description of the appended claims by those skilled in the art.

### BRIEF DESCRIPTION OF THE DRAWINGS

Fig. 1 is a flowchart of a method for manufacturing an electrode assembly for use in a battery according to an example of the present disclosure;
Fig. 2 is a schematic diagram of an apparatus for manufacturing an electrode assembly for use in a battery according to an example of the present disclosure, which shows a state in which a first electrode is seated on a first region of the separator sheet;
Fig. 3 is a schematic diagram of an apparatus for manufacturing an electrode assembly for use in a battery according to an example of the present disclosure, which shows a state in which an adhesive is applied to a lower portion of a first electrode;
Fig. 4 is a schematic diagram of an apparatus for manufacturing an electrode assembly for use in a battery according to an example of the present disclosure, which shows a state in which an adhesive is applied to a lower portion of a first electrode;
Figs. 5 and 6 are schematic diagrams of an apparatus for manufacturing an electrode assembly for use in a battery according to an example of the present disclosure, which show a state in which the stacking table rotates and moves, and at the same time, the separator guide and the first adhesive applicator (e.g. first upper nozzle) are linearly moved, and the adhesive is applied to the second region while the first adhesive applicator rotates;
Fig. 7 is a schematic diagram of an apparatus for manufacturing an electrode assembly for use in a battery according to an example of the present disclosure, which shows a state in which the second region applied with the adhesive covers the first electrode while the separator guide linearly moves in the opposite direction;
Fig. 8 is a schematic diagram of an apparatus for manufacturing an electrode assembly for use in a battery according to an example of the present disclosure, which shows a state in which the second electrode is seated on the second region of the separator sheet;
Fig. 9 is a cross-sectional view of an electrode assembly according to an example of the present disclosure; and
Fig. 10 is an exploded perspective view of a battery cell according to an example of the present disclosure.

### DETAILED DESCRIPTION OF THE EXAMPLES

Hereinafter, various examples of the present disclosure will be described in detail with reference to the accompanying drawings so that those skilled in the art can easily carry out them. The present disclosure may be modified in various different ways, and is not limited to the examples set forth herein.

Portions that are irrelevant to the description may be omitted to clearly describe the present disclosure, and like reference numerals may designate like elements throughout the description.

Further, in the drawings, the size and thickness of each element may be arbitrarily illustrated for convenience of description, and the present disclosure is not necessarily limited to those illustrated in the drawings. In the drawings, the thickness of layers, regions, etc. may be exaggerated for clarity. In the drawings, for convenience of description, the thicknesses of some layers and regions may be exaggerated.

Further, throughout the description, when a portion is referred to as "including" or "comprising" a certain component, it means that the portion can further include other components, without excluding the other components, unless otherwise stated.

Hereinafter, a method of manufacturing an electrode assembly for use in a battery, namely a method for manufacturing a battery cell comprising said electrode assembly, according to examples of the present disclosure will be described.

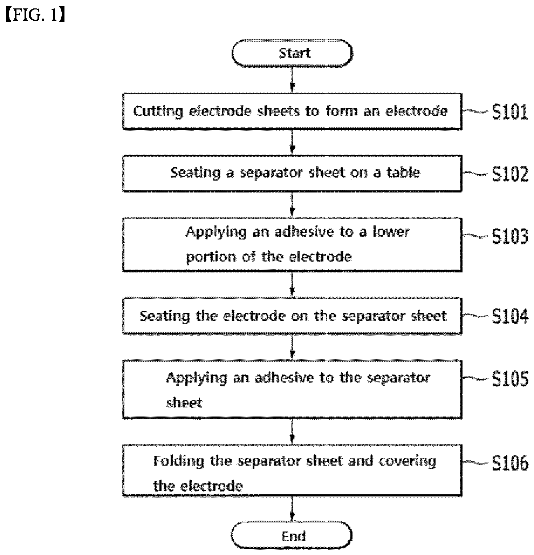

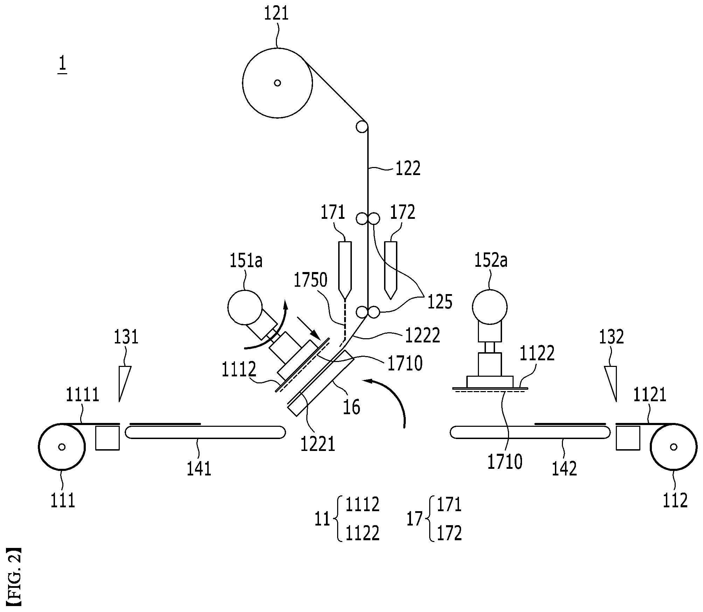

Fig. 1 is a flowchart of a method of manufacturing an electrode assembly for use in a battery, namely a method for manufacturing a battery cell comprising said electrode assembly, according to an example of the present disclosure. Fig. 2 is a schematic diagram of an apparatus 1 for manufacturing an electrode assembly for use in a battery according to an example of the present disclosure, which shows a state in which a first electrode is arranged (e.g. seated) on a first region (e.g. a first portion) of the separator sheet. Such an apparatus may for example be used for executing the method of Fig. 1 and is therefore used as a non-limiting example for illustration purposes in the following.

The apparatus 1 of Fig. 2 comprises a first electrode supply unit and a second electrode supply unit. In this example, the first electrode supply unit is (e.g. consists or is made up of) or comprises a first electrode reel 111, a first transfer device 141 and a first electrode placement device, namely a head (or header) 151. The second electrode supply unit is (e.g. consists or is made up of) or comprises a second electrode reel 111, a second transfer device 141 and a second electrode placement device, namely a head (or header) 151.

The apparatus 1 further comprises a separator supply unit, which in this example is or comprises a separator reel 121. The apparatus 1 also comprises a stacking table 16 (also referred to simply as table) and a separator guide 125. The apparatus 1 further comprises first and second adhesive applicators, which in this example each are or comprise a nozzle 171, 172 (also referred to as upper nozzles 171, 172 and collectively forming a pair of upper nozzles 17).

The apparatus 1 is configured for stacking first electrodes 1112 and second electrodes 1122 on the table 16 with a separator sheet 122 folded therebetween. The first and second electrodes 1112, 1122 may collectively be referred to as electrode(s) 11. Portions of the separator sheet 122 on which first electrodes 1112 are arranged (e.g. first, third, ... portions of the separator sheet 122) may collectively be referred to as first region 1221. Portions of the separator sheet 122 on which second electrodes 1122 are arranged (e.g. second, fourth, ... portions of the separator sheet 122) may collectively be referred to as second region 1222.

Referring to Figs. 1 and 2, a method for manufacturing a battery cell comprising an electrode assembly according to an example of the present disclosure includes a step of shaping (e.g. cutting) electrode sheets 1111 and 1121 to form an electrode 11 (e.g. a first electrode 1112 and/or a second electrode 1122) (S101); a step of arranging (e.g. seating) a separator sheet 122 on the table 16 (S102); a step of applying an adhesive to the lower portion (e.g. a first or bottom surface) of the electrodes 1112 and/or 1122 (S103); a step of arranging (e.g. seating) the electrodes 1112 and/or 1122 on the separator sheet 122 (S104); a step of applying an adhesive on the separator sheet 122 (S105); and folding the separator sheet 122 applied with the adhesive and covering the electrodes 1112 and/or 1122 (S106).

Therefore, the method for manufacturing a battery cell comprising an electrode assembly according to the present example applies an adhesive to the upper portion (e.g. a second or top surface opposite to the first surface) and lower portion of the electrode 11 (e.g. the first electrode 1112 and/or the second electrode 1122) in contact with the separator sheet 122, respectively, when stacking the electrode 11 and the separator sheet 122 in a Z-folding type, thereby capable of preventing the electrode 11 from being offset or displaced from a target position (fixed position).

Hereinafter, each step shown in the flowchart of Fig. 1 will be specifically described with reference to Figs. 2 to 7 as a non-limiting example for illustration purposes.

The battery cell manufacturing apparatus 1 according to an example of the present disclosure includes electrode reels 111 and 112 on which an electrode sheet (e.g. having a plurality of electrodes 11 formed thereon or to be formed thereof) is unwound; a separator reel 121 in which a separator sheet 122 that is folded when the electrodes 11 are seated, covers the electrodes 11 and is stacked with the electrodes 11 is unwound; a table 16 on which the electrode 11 and the separator sheet 122 are seated on the upper surface; a separator guide 125 that guides a folding direction of the separator sheet 122; and a pair of upper nozzles 17 that apply an adhesive between the table 16 and the separator guide 125.

The electrode reels 111 and 112 may include a first electrode reel 111 on which a first electrode sheet 1111 (e.g. having a plurality of first electrodes 1112 formed thereon or to be formed thereof) is unwound; and a second electrode reel 112 on which the second electrode sheet 1121 (e.g. having a plurality of second electrodes 1122 formed thereon or to be formed thereof) is unwound.

The electrode reels 111 and 112 are reels on which the electrode sheets 1111 and 1121 are wound, and the electrode sheets 1111 and 1121 are unwound from the electrode reels 111 and 112.

Then, the electrode sheets 1111 and 1121 are cut to form the electrodes 11. More specifically, according to the present example, the first electrode reel 111 is a reel on which the first electrode sheet 1111 is wound, and the first electrode sheet 1111 is unwound from the first electrode reel 111. Further, the second electrode reel 112 is a reel on which the second electrode sheet 1121 is wound, and the second electrode sheet 1121 is unwound from the second electrode reel 112.

Here, the electrode sheets 1111 and 1121 can be manufactured by applying a slurry of an electrode active material, a conductive material, and a binder onto an electrode current collector, and then drying and pressing the slurry. However, the method for manufacturing the electrode sheets 1111 and 1121 is not limited thereto, and any suitable method for manufacturing the electrode sheets 1111 and 1121 and/or the electrodes 1112, 1122 known in the art can be used for manufacturing the electrode sheets 1111, 1121 and the electrodes 1112, 1122, respectively.

More specifically, the first electrode sheet 1111 and the second electrode sheet 1121 may include electrode active materials having different polarities from each other. That is, the first electrode 1112 and the second electrode 1122 may be electrodes 11 having different polarities from each other. As an example, if the first electrode 1112 is a cathode, the second electrode 1122 may be an anode. As another example, if the first electrode 1112 is an anode, the second electrode 1122 may be a cathode.

The separator reel 121 is a reel on which the separator sheet 122 is wound, and the separator sheet 122 is unwound from the separator reel 121. After that, the separator sheet 122 is stacked with the electrodes 11 formed by cutting the electrode sheets 1111 and 1121. Here, the electrode 11 and the separator sheet 122 are stacked in a Z-folding type. More specifically, in the present example, when the first electrode 1112 is seated on the separator sheet 122, one side is folded to cover the first electrode 1112, and when the second electrode 1122 is seated, the other side is folded to cover the second electrode 1122. The separator sheet 122 may thus assume or take a zigzag or meandering shape.

The table 16 may be configured such that the electrode 11 and the separator sheet 122 can be seated and stacked on the upper surface. More preferably, the upper surface of the table 16 is formed substantially flat, so that the electrode 11 and the separator sheet 122 can be stably stacked.

The table 16 may be arranged between the first and second electrode supply units, in particular between the first electrode reel 111 and the second electrode reel 112. More specifically, the table 16 may rotate and reciprocate between the first electrode reel 111 and the second electrode reel 112. In one example, the table 16 may perform a reciprocating rotating motion (rotation reciprocating motion) between the first electrode reel 111 and the second electrode reel 112 in an angle range of 0 degrees to 180 degrees with respect to the bottom surface. However, the rotation angle of the table 16 is not limited thereto, and may be rotated at various angles.

Thereby, the table 16 can perform a reciprocating rotating motion between the first electrode reel 111 and the second electrode reel 112, so that the folding operation of the separator sheet 122 of the separator guide 125 can be assisted while the electrode 11 can be stacked more quickly on the table 16. In this regard, the process speed and efficiency can be further improved.

The battery cell manufacturing apparatus 1 according to the present example may further include a first transfer device 141 that transfers the first electrode 1112 toward the table 16; and a second transfer device 142 that transfers the second electrode 1122 towards the table 16. Here, the first transfer device 141 may transfer the first electrode 1112, which is formed by cutting the first electrode sheet 1111 unwound from the first electrode reel 111, toward the table 16. Further, the second transfer device 142 may transfer the second electrode 1122, which is formed by cutting the second electrode sheet 1121 unwound from the second electrode reel 112, toward the table 16.

Thereby, in the present example, the first electrode 1112 and the second electrode 1122 can be respectively transferred to both sides of the table 16 through the first transfer device 141 and the second transfer device 142, which may make it easy to alternately stack the first electrode 1112 and the second electrode 1122 on the separator sheet 122.

Particularly, in the present example, as the table 16 performs a reciprocating rotating motion between the first electrode reel 111 and the second electrode reel 112, the table 16 can be rotated adjacent to each of the first transfer device 141 and the second transfer device 142. Thereby, in the present example, the electrodes 11 transferred from the first transfer device 141 and the second transfer device 142 can be quickly stacked on the table 16.

The battery cell manufacturing apparatus 1 according to the present example may include heads (or headers) 151 and 152 that adsorb the electrode 11 and seat it on the separator sheet 122. More specifically, the heads 151 and 152 may further include a first head (or header) 151 that adsorbs the first electrode 1112 and seats it on the separator sheet 122, and a second head (or header) 152 that adsorbs the second electrode 1122 and seats it on the separator sheet 122. The heads 151, 152 may be examples of an electrode placement device, in particular an electrode placement head according to the present disclosure.

Here, the first head 151 and the second head 152 each can perform a reciprocating rotating motion toward the table 16. More specifically, the first head 151 and the second head 152 can perform a reciprocating rotating motion in a direction towards or facing the upper surface of the table 16.

More specifically, the first head 151 may pick up and hold (e.g. adsorb and/or grab) the first electrode 1112 transferred from the first transfer device 141 toward the table 16, and the second head 152 may pick up and hold (e.g. adsorb and/or grab) the second electrode 1122 transferred from the second transfer device 142 toward the table 16.

Particularly, in the present example, the table 16 is rotated towards or adjacent to the first transfer device 141 and the second transfer device 142, respectively, and the first head 151 and the second head 152 may perform a reciprocating rotating motion toward the table 16.

Thereby, in the present example, the first head 151 and the second head 152 can move the electrode 11 upward of the table 16 (e.g. facing the table 16) performing a reciprocating rotating motion, and can stably seat the electrode 11 on the separator sheet 122.

Further, the heads 151 and 152 may measure whether or not the first electrode 1112 or the second electrode 1122 is misaligned for each of first electrode 1112 or second electrode 1122, and may then correct the position as necessary, thereby being able to precisely seat at a desired position (target position) on the separator sheet 122 located on the table 16. Thereby, in the present example, the alignment degree between the electrode 11 and the separator sheet 122 stacked on the table 16 may be further improved.

Referring to Fig. 2, in the battery cell manufacturing apparatus 1 according to the present example, the electrode 11 may be seated on the separator sheet 122 in a state where an adhesive is applied (has been applied) to at least a part of the lower portion (e.g. a first or bottom surface) of the electrode 11. More specifically, in the present example, an adhesive may be applied to at least a part of the lower portion of the electrode 11 when located on the transfer devices 141 and 142, or an adhesive may be applied to at least a part of the lower portion of the electrode 11 when adsorbed to the heads 151 and 152.

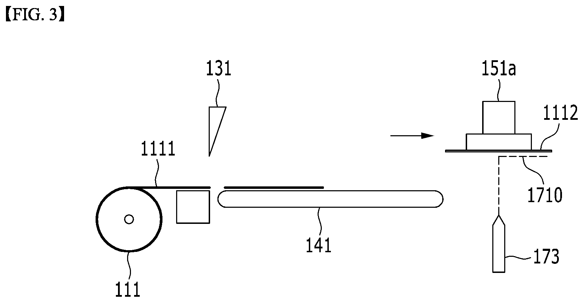

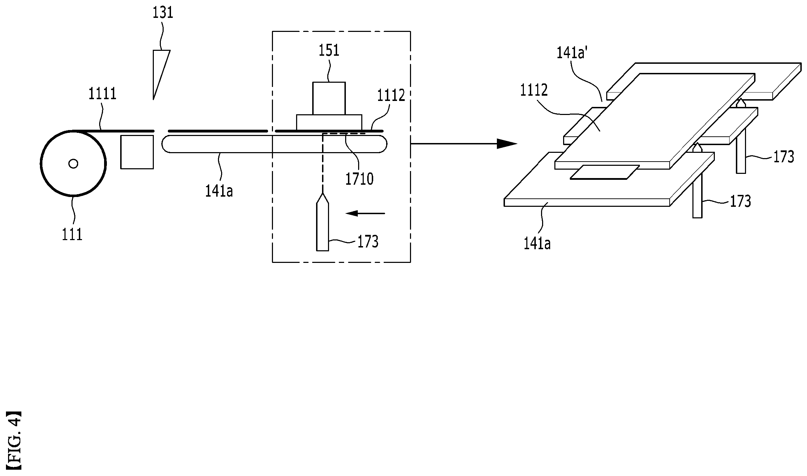

Fig. 3 is a schematic diagram of the apparatus 1 for manufacturing an electrode assembly according to an example of the present disclosure, which shows a state in which an adhesive is applied to a lower portion of a first electrode. Fig. 4 is a schematic diagram of the apparatus 1 for manufacturing an electrode assembly according to another example of the present disclosure, which shows a state in which an adhesive is applied to a lower portion of a first electrode.

Referring to Figs. 3 and 4, the battery cell manufacturing apparatus 1 according to the present example may include a bottom-side applicator, which may e.g. be or comprise a nozzle 173 (also referred to as a lower nozzle 173) that applies an adhesive to at least a part of a lower portion of the first electrode 1112. More specifically, the lower nozzle 173 may apply an adhesive to at least a part of the lower (or bottom) surface of the first electrode 1112. Thereby, a first adhesive layer 1710 may be formed on the lower surface of the first electrode 1112.

In one example, referring to Fig. 3, when the first electrode 1112 is held by (e.g. adsorbed to) the first head 151, the lower nozzle 173 may apply an adhesive to at least a part of the lower portion of the first electrode.

In another example, referring to Fig. 4, the first transfer device 141a includes a first opening, e.g. a first slit (or groove) 141a' that is opened toward the first electrode 1112, and thus, the lower nozzle 173 can apply an adhesive to at least a part of the lower portion of the first electrode 1112 through the first slit 141a'. Here, the first transfer device 141a may be configured such that at least one first slit 141a' (e.g. a plurality of first slits) is formed. The plurality of first slits 141a' may be arranged to be spaced apart from each other. Further, as shown in Fig. 4, the first slit(s) 141a' may be extended along the width direction of the first electrode 1112 (e.g. perpendicular to a transfer direction of the first transfer device 141a as illustrated in Fig. 4), but is not limited thereto and can be extended in various directions. The first slit(s) 141a may be arranged in and/or extend through a transfer surface of the first transfer device 141a, e.g. a surface that the first electrode 1112 is transferred on or along as illustrated in Fig. 4.

Here, the first electrode 1112 is described as an example for convenience of explanation. The second head 152 and/or the second transfer device 142 for the second electrode 1122 may be embodied in the same way or in a similar way.

Thereby, the battery cell manufacturing apparatus 1 according to the present example can apply an adhesive to at least a part of the lower portion of the electrode 11 in the process of transferring the electrode 11, which is thus advantageous in that the convenience and speed of the process can be improved.

The adhesive may be uniformly applied to the lower portion of the electrode 11. However, when the adhesive is completely applied to the entire surface of the lower portion of the electrode 11, the amount of the adhesive applied may be excessively large. In such a case, the adhesive may flow to the outside of the separator sheet 122 to contaminate other portions, and when the secondary battery is manufactured, the function of generating power may not be smooth.

Therefore, in the present example, it may be preferable that the adhesive is applied to the lower portion of the electrode 11 selectively (e.g. locally only), e.g. by a spot application method of applying in a spot (e.g. as a plurality of spots) and/or a line application method of applying in a line (e.g. as a plurality of lines). That is, the first adhesive layer 1710 may be preferably formed in a spot pattern and/or a line pattern.

If, in contrast, the amount of the adhesive applied is too small, the electrode 11 may not be or remain fixed to the separator sheet 122 while the cell moves, and can be offset or displaced from a target position. Therefore, it may be preferable that the interval between the regions to which the adhesive is applied is not excessively wide.

Further, the adhesive is applied to the surface of the electrode 11, and can be applied in a minimum amount that can secure the adhesive force between the electrode 11 and the separator sheet 122. When, in contrast, the adhesive is applied directly onto the separator sheet 122, the separator sheet 122 may absorb a part of the adhesive, which may cause a problem that a larger amount of adhesive must be applied in order to secure the adhesive force between the electrode 11 and the separator sheet 122.

The adhesive may be dissolved in an electrolytic solution, in particular the electrolytic solution that the electrode assembly is housed with in the battery cell. More specifically, when the first adhesive layer 1710 formed in the lower portion of the electrode 11 is impregnated with an electrolytic solution, the adhesive contained in the first adhesive layer 1710 may be dissolved in the electrolytic solution. Here, the adhesive being dissolved may mean that the adhesive is dissolved into the electrolytic solution. That is, it may mean that the region of the first adhesive layer 1710 formed in the lower portion of the electrode 11 is reduced (e.g. dissolved partially), or the first adhesive layer 1710 is completely eliminated (or dissolved), so that the first adhesive layer 1710 does not remain in the lower portion of the electrode 11.

In one example, the adhesive may be an acrylate-based adhesive. Thereby, in the present example, as the acrylate-based adhesive is applied as the adhesive to the lower portion of the electrode 11, the adhesive may be dissolved into the electrolytic solution contained in the final battery cell.

Thereby, in the present example, the first adhesive layer 1710 can fix the electrode 11 to the separator sheet 122 in the manufacturing process to prevent the separation from a fixed position. In addition, the first adhesive layer 1710 may be dissolved in the electrolytic solution contained in the final battery cell, and thus may not hinder the movement of lithium ions between the electrode and the separator, and can further improve the battery cell performance.

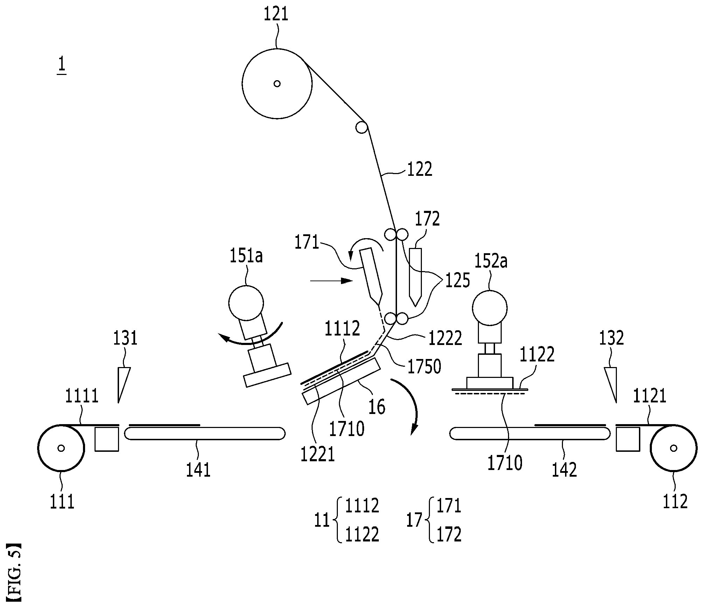

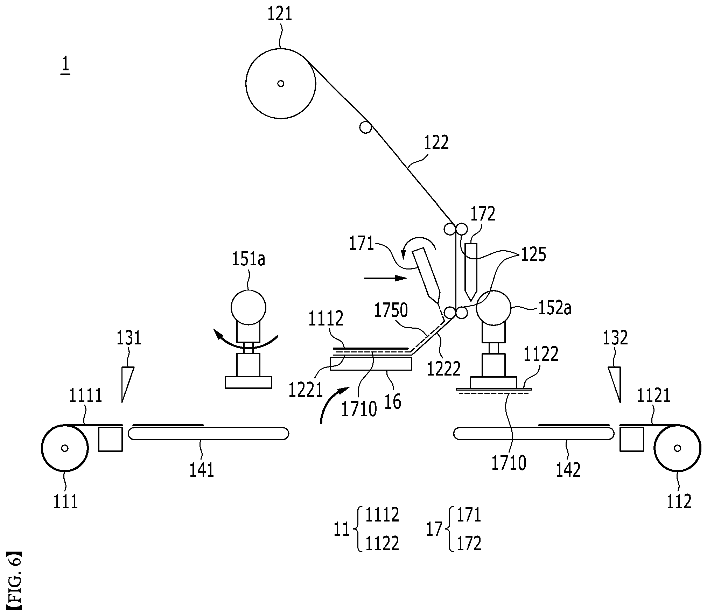

Figs. 5 and 6 are schematic diagrams of the apparatus 1 for manufacturing an electrode assembly for use in a battery according to an example of the present disclosure, which show a state in which the table rotates and moves, and at the same time, the separator guide and the first upper nozzle are linearly moved, and the adhesive is applied to the second region (e.g. the second portion) while the first upper nozzle rotates.

Referring to Figs. 2, 5, and 6, the pair of upper nozzles 17 apply an adhesive to at least a part of the separator sheet 122 located between the table 16 and the separator guide 125. More specifically, the pair of upper nozzles 17 include a first upper nozzle 171 that applies an adhesive to at least a part of the second region 1222 (e.g. the second portion) of the separator sheet 122 and a second upper nozzle 172 that applies an adhesive to at least a part of the first region 1221 (e.g. the first and/or third portion) of the separator sheet 122.

Here, the first region 1221 of the separator sheet 122 refers to a region in the separator sheet 122 to which the first electrode 1112 is attached. In some cases, the first region 1221 refers to a region in the separator sheet 122 to which the first electrode 1112 is attached while covering the second electrode 1122 (e.g. the first region 1221 or the first portion thereof may be arranged above a respective second electrode 1122 and below a respective first electrode 1112 in the final electrode assembly). Further, the second region 1222 refers to a region in the separator sheet 122 to which the second electrode 1122 is attached while covering the first electrode 1112 (e.g. the second region 1221 or the second portion thereof may be arranged above a respective first electrode 1112 and below a respective second electrode 1112 in the final electrode assembly). In other words, the first electrode 1112 is seated on the first region 1221 (e.g. on the first portion) of the separator sheet 122, and the second electrode 1122 may be seated on the second region 1222 (e.g. on the second portion) of the separator sheet 122.

At this time, the first upper nozzle 171 may apply the adhesive to the surface covering the first electrode 1112 in the second region 1222 of the separator sheet 122. That is, the first upper nozzle 171 may apply the adhesive to a surface opposite to the surface to which the second electrode 1122 is attached in the second region 1222 of the separator sheet 122.

Further, the second upper nozzle 172 may apply the adhesive to a surface covering the second electrode 1122 in the first region 1221 of the separator sheet 122. That is, the second upper nozzle 172 may apply the adhesive to a surface opposite to the surface to which the first electrode 1112 is attached in the first region 1221 of the separator sheet 122.

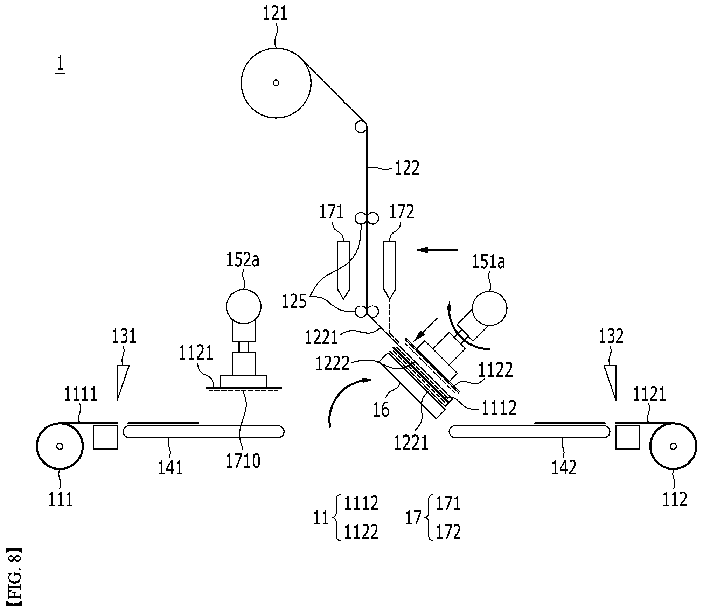

Further, the first upper nozzle 171 and the second upper nozzle 172 may be arranged on both sides with the separator sheet 122 being interposed therebetween. That is, before the second region 1222 of the separator sheet 122 covers the upper portion of the first electrode 1112, the first upper nozzle 171 may apply an adhesive to at least a part of an upper portion of the first electrode 1112 to form a second adhesive layer 1750. Further, as described later in Fig. 8, before the first region 1221 of the separator sheet 122 covers the upper portion of the second electrode 1122, the second upper nozzle 172 may apply an adhesive to at least a part of an upper portion of the second electrode 1122 to form a second adhesive layer 1750.

Further, the pair of upper nozzles 17 may be configured to move back and forth relative to the table along a first direction (e.g. along a horizontal direction in Figs. 5 and 6 as illustrated by the horizontal arrows). Put differently, the pair of upper nozzles 17 may linearly reciprocate left and right on the basis of (relative to) the table 16 (e.g. along a straight line). That is, the pair of upper nozzles 17 may apply an adhesive to at least a part of the first region 1221 or the second region 1222 of the separator sheet 122 while linearly moving in the direction toward from one side to the other side of the table 16 or in the opposite direction thereof.

As an example, referring to Figs. 2,5, and 6, the first electrode 1112 is seated on the first region 1221 (e.g. the first portion) of the separator sheet 122, and at the same time, the first upper nozzle 171 may linearly move on (e.g. along or across) the second region 1222 (e.g. the second portion) of the separator sheet 122, e.g. towards the second electrode supply unit. Here, the first upper nozzle 171 may apply the adhesive to at least a part of the second region 1222 while linearly moving in a direction away from the table 16. Additionally, as described later in Fig. 8, the second electrode 1122 is seated on the second region 1222 (e.g. the second portion) of the separator sheet 122, and at the same time, the second upper nozzle 172 may linearly move on the first region 1221 (e.g. the first or third portion) of the separator sheet 122, e.g. towards the first electrode supply unit. Here, the second upper nozzle 172 may apply the adhesive to at least a part of the first region 1221 while linearly moving in a direction away from the table 16.

Further, the details of the application of the adhesive by the pair of upper nozzles 17 may be similar to the application of the adhesive by the lower nozzle 173 described above.

Further, the pair of upper nozzles 17 may move (e.g. reciprocate left and right) simultaneously or individually (e.g. separately) on the basis of (relative to) the table 16. More preferably, the pair of upper nozzles 17 can reciprocate left and right at the same time on the basis of the table 16. As an example, when (e.g. after and/or simultaneously with at least in part) the first upper nozzle 171 applies an adhesive from one side to the other side of the first region 1221 located on the right side of the table 16 as shown in Figs. 5 and 6, the second upper nozzle 172 may apply an adhesive from the other side to the one side of the second region 1222 located on the left side of the table 16, as will be described later in Fig. 8.

Thereby, in the present example, the process time of the adhesive application process of the pair of upper nozzles 17 can be reduced, and the process efficiency can be further improved. Additionally, the adhesive application process of the pair of upper nozzles 17 can be performed simultaneously with the process of seating the electrode 11 on the separator sheet 122, so that process efficiency can be further improved.

As the table 16 rotates back and forth (performs a reciprocating rotating motion) between the first electrode reel 111 and the second electrode reel 112, the position and/or angle between the pair of upper nozzles 17 and the separator sheet 122 may change or vary. Thereby, the application interval and/or the application amount of the adhesive applied to the separator sheet 122 from the pair of upper nozzles 17 may become non-uniform.

According to an example of the present disclosure, as shown in Figs. 5 and 6, when (e.g. before and/or while) the pair of upper nozzles 17 apply the adhesive on the separator sheet 122, respectively, the first upper nozzle 171 (e.g. an end part of the first upper nozzle 171) and/or the second upper nozzle 172 (e.g. an end part of the second upper nozzle 172) may rotate in a direction adjacent to (e.g. towards) the separator sheet 122. The pair of upper nozzles 17 may rotate in a direction in which an end part of the first upper nozzle 171 and/or an end part of the second upper nozzle 172 is oriented towards or faces the (upper) surface of the separator sheet 122 (e.g. is perpendicular to said surface, for example at an angle between 75° and 105°). In other words, the pair of upper nozzles 17 can adjust the angle between the end part of the first upper nozzle 171 and/or the end part of the second upper nozzle 172 and the (upper) surface of the separator sheet 122, respectively (e.g. to maintain said angle).

In one example, the pair of upper nozzles 17 are rotated so that the angle between the end part of the first upper nozzle 171 and/or the end part of the second upper nozzle 172 and the upper surface of the separator sheet 122 is constant or maintained (e.g. varies by less than 20°, in some examples by less than 10°, in one example by less than 5°). However, the rotation angle of the pair of upper nozzles 17 is not limited thereto, and may also be different in the present example, e.g. as long as it is an angle at which the adhesive application interval becomes uniform.

Further, although not shown in Figs. 2, 5 and 6, for the pair of upper nozzles 17, the position can additionally or alternatively be moved in a direction in which the first upper nozzle 171 (e.g. the end part of the first upper nozzle 171) and/or the second upper nozzle 172 (e.g. the end part of the second upper nozzle 172) is adjacent to the separator sheet 122 (for example in a direction towards the separator sheet 122, in the first direction and/or in a second direction perpendicular to the first direction, e.g. a vertical direction in Figs. 2,5 and 6).

In one example, the position of the pair of upper nozzles 17 are moved so that the distance or the height difference between first upper nozzle 171 (e.g. the end part of the first upper nozzle 171) and/or the second upper nozzle 172 (e.g. the end part of the second upper nozzle 172) and the upper surface of the separator sheet 122 can be adjusted to be constant or maintained (e.g. varies by less than 25%, in some examples by less than 10%, in one example by less than 5%). However, the position of the pair of upper nozzles 17 is not limited thereto, and may also be different in the present example, e.g. as long as it is a position at which the application interval of the adhesive becomes uniform.

Thereby, the present example may adjust the angle or position of the pair of upper nozzles 17, so that the application interval and/or the application amount of the adhesive applied from the pair of upper nozzles 17 can be made more uniform, and the quality can also be further improved.

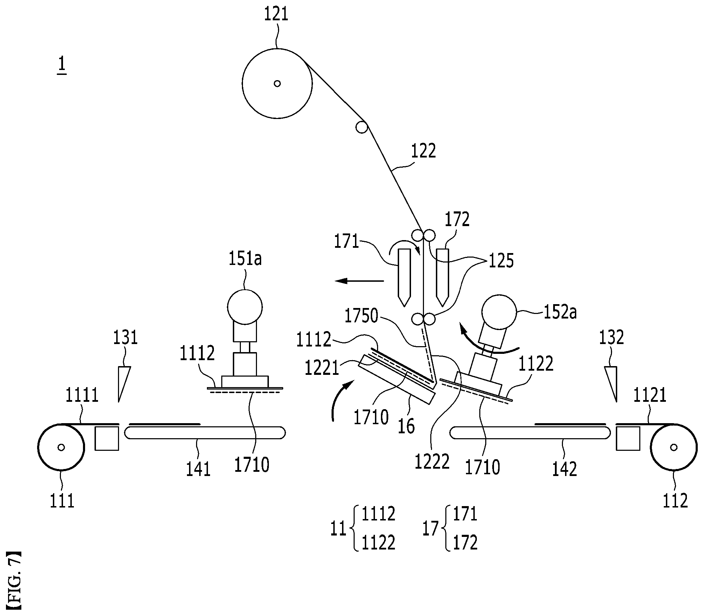

Fig. 7 is a schematic diagram of the apparatus 1 for manufacturing an electrode assembly for use in a battery according to an example of the present disclosure, which shows a state in which the second region applied with the adhesive (e.g. the second portion of the separator sheet 122) covers the first electrode while the separator guide linearly moves in the opposite direction.

Referring to Figs. 5 to 7, in the present example, the separator guide 125 can guide the folding of the separator sheet 122, e.g. a folding direction of the separator sheet 122 can be guided by the separator guide 125. More specifically, the separator guide 125 can move back and forth relative to the table 16 (e.g. linearly reciprocate left and right on the basis of the table 16), for example along the first direction.

In one example, the separator guide 125 may comprise a pair of rollers or rolls (guiding rollers). The separator guide may for example have a shape in which a pair of rollers are horizontally arranged (e.g. at a same height above the table 16). The separator sheet 122 may be inserted between the pair of rollers. However, the shape of the separator guide 125 is not limited thereto, and may be different than in the present example, e.g. as long as it is a shape capable of controlling the folding direction of the separator sheet 122.

The separator guide 125 may be located individually at the upper and lower portions on the basis of the pair of upper nozzles 17. For example, the separator guide 125 may comprise a first pair of rollers adjacent to or below a lower or bottom portion of the pair of upper nozzles 17 (e.g. between the pair of upper nozzles 17 and the table 16) and a second pair of rollers adjacent to or above an upper or top portion of the pair of upper nozzles 17 as shown in Figs. 5 to 7. However, the position and number of the separator guides 125 (e.g. rollers) are not limited thereto, and may be different than in the present example, e.g. as long as it is a position and number capable of controlling the folding direction of the separator sheet 122.

The separator guide 125 may simultaneously reciprocate left and right on the basis of the table 16 together with a pair of upper nozzles 17 (e.g. move along the first direction at the same time as the pair of upper nozzles 17), and/or the separator guide 125 and the pair of upper nozzles 17 may reciprocate left and right independently of each other (e.g. may move along the first direction at different times).

More preferably, the first upper nozzle 171 applies the adhesive to at least a part of the second region 1222 (e.g. the second portion) of the separator sheet 122, and at the same time, the separator guide 125 linearly moves in a direction toward the second electrode reel 112 or the second transfer device 142. Further, as described later in Fig. 8, the second upper nozzle 172 applies the adhesive to at least a part of the first region 1221 (e.g. a third portion) of the separator sheet 122, and at the same time, the separator guide 125 may linearly move in a direction toward the first electrode reel 111 or the first transfer device 141.

Thereby, the separator guide 125 forms a region (or portion) where the adhesive can be applied from the first upper nozzle 171 or the second upper nozzle 172 in the separator sheet 122, so that the separator guide 125 can assist the adhesive application process of the pair of upper nozzles 17 (e.g. by unwinding said region or portion from the separator reel 121 and arranging or providing it between the separator guide 125 and the table 16 adjacent to the first and/or second upper nozzles 171, 172).

Further, when the separator guide 125 moves back and forth relative to the table 16 between the first and second transfer devices 141, 142 (e.g. linearly reciprocates toward the first transfer device 141 and the second transfer device 142 on the basis of the table 16), the separator sheet 122 may be folded along the moving direction of the separator guide 125 so that the separator sheet 122 can cover the electrode 11.

In one example, referring to Fig. 7, in a state in which the first electrode 1112 is seated on the first region 1221 (e.g. a first portion) of the separator sheet 122, the separator guide 125 can linearly move toward the first transfer device 141 so that the second region 1222 (e.g. a second portion) of the separator sheet 122 can cover an upper portion of the first electrode 1112.

More specifically, when the adhesive application of the first upper nozzle 171 is completed as shown in Fig. 6, the separator guide 125 linearly moves in a direction in which the second region 1222 of the separator sheet 122 applied with the adhesive (e.g. the second portion) covers the first electrode 1112 as shown in Fig. 7. Similarly, when the adhesive application of the second upper nozzle 172 is completed, the separator guide 122 is configured such that the first region 1221 of the separator sheet 122 to which the adhesive is applied (e.g. the first or third portion) covers the second electrode 1122 .

Thereby, in the present example, the separator guide 125 may perform the folding process of the separator sheet 122 while assisting the adhesive application process of the pair of upper nozzles 17, so that the process time can be reduced, and the process efficiency can be further improved.

Fig. 8 is a schematic diagram of the apparatus 1 for manufacturing an electrode assembly according to an example of the present disclosure, which shows a state in which the second electrode is seated on the second region (e.g. the second portion) of the separator sheet.

Referring to Figs. 2 and 8, in the battery cell manufacturing apparatus 1 according to the present example, the table 16 can perform a reciprocating rotating motion toward the second electrode reel 112 or the second transfer device 142, similarly as for the placement of the first electrode 1112. At this time, the second electrode 1122 may be held by (e.g. adsorbed to or grabbed by) the second head 152 to perform a reciprocating rotating motion. In one example, as shown in Fig. 8, in a state where the second electrode 1122 is adsorbed to the second head 152, the second head 152 can rotate so as to be located at (e.g. adjacent to and/or facing) the upper portion of the table 16. At this time, the second electrode 1122 may be seated on the second region 1222 of the separator sheet 122. In addition, the details of the second electrode 1122 and the second head 152 can be similar to the first electrode 1112 and the first head 151, respectively, described above.

Further, similarly to the first upper nozzle 171, the second upper nozzle 172 may move back and forth relative to the table 16, e.g. perform linear reciprocating motion on the basis of the table 16. In one example, as the second upper nozzle 172 moves from one side of the first region 1221 (first or third portion) located on the right side of the table 16 to the other side, an adhesive may be applied to at least a part of the first region 1221. In addition, the details of the second upper nozzle 172 may be similar to the first upper nozzle 171 described above.

The electrode assembly manufacturing method according to an example of the present disclosure using the manufacturing apparatus 1 can be performed as follows (e.g. for manufacturing a unit cell for an electrode assembly).

First, referring to Figs. 1 and 2, when the first electrode sheet 1111 is unwound from the first electrode reel 111, the first cutter 131 cuts the first electrode sheet 1111 to form a plurality of first electrodes 1112 (S101).

Meanwhile, when the separator sheet 122 is unwound from the separator reel 121, it is arranged (e.g. seated) on the upper surface of the table 16 (S102). At this time, the table 16 can rotate toward the first electrode reel 111 or the first transfer device 141 in a state in which the separator sheet 122 is seated or arranged thereon.

Further, the lower nozzle 173 (bottom-side applicator) applies an adhesive to the lower portion (e.g. a bottom surface) of the first electrode 1112 (S103). In one example, as shown in Fig. 3, in a state where the first head 151 holds (e.g. adsorbs) the first electrode 1112, the lower nozzle applies an adhesive to the lower portion of the first electrode 1112. In another example, as shown in Fig. 4, the lower nozzle 173 applies the adhesive to the lower portion of the first electrode 1112 while the first transfer device 141 transfers the first electrode 1112.

Further, referring to Figs. 1 and 2, the first head 151 may linearly move on (e.g. towards) the table 16 in a state of adsorbing the first electrode 1112. And, when the first head 151 is located above the table 16, as shown in Fig. 2, the first head 151 seats the first electrode 1112 on which the first adhesive layer 1710 is formed on the first region 1221 of the separator sheet 122 (S104).

Further, referring to Figs. 1, 5, and 6, when the first electrode 1112 is seated on the first region 1221 (e.g. the first portion) of the separator sheet 122, the first upper nozzle 171 may apply an adhesive to the second region 1222 (e.g. the second portion) of the separator sheet 122 (S105). Here, as the first upper nozzle 171 moves toward the second transfer device 142, the second adhesive layer 1750 may be formed on the second region 1222 of the separator sheet 122. At this time, the separator guide 125 and the first upper nozzle 171 can linearly move together.

Further, referring to Figs. 1 and 7, in a state where at least a part of the second adhesive layer 1750 is formed on the second region 1222 of the separator sheet 122, the separator guide 125 moves in a direction toward the first transfer device 141 that is opposite to the moving direction of the first upper nozzle 171, and one side of the separator sheet 122 is folded, so that the second region 1222 of the separator sheet 122 covers the first electrode 1112 (S106).

Meanwhile, as shown in Fig. 2, when the second electrode sheet 1121 is unwound from the second electrode reel 112, the second cutter 132 cuts the second electrode sheet 1121. Then, a plurality of second electrodes 1122 are formed. When the second transfer device 142 transfers the second electrode 1122, the second head 152 holds (e.g. adsorbs) the second electrode 1122. Here, similarly to the first electrode 1112, a first adhesive layer 1710 formed by applying an adhesive from the lower nozzle 173 may be located at the lower portion (e.g. a bottom surface) of the second electrode 1122.

And, as shown in Fig. 8, the table 16 rotates toward the second electrode reel 112 or the second transfer device 142 in a state in which the second region 1222 of the separator sheet 122 is seated. At this time, when the second region 1222 of the separator sheet 122 covers the first electrode 1112, the second head 152 adsorbing the second electrode 1122 moves toward the upper portion of the second region 1222 to seat the second electrode 1122 on the second region 1222.

Further, as shown in Fig. 8, the second upper nozzle 172 applies the adhesive to the first region 1221 (e.g. the third portion) of the separator sheet 122. Here, as the second upper nozzle 172 moves toward the first transfer device 141, a second adhesive layer 1750 may be formed in the first region 1221 (e.g. the third portion) of the separator sheet 122. At this time, the separator guide 125 and the second upper nozzle 172 may linearly move together.

Then, in a state where at least a part of the second adhesive layer 1750 is formed in the first region 1221 (e.g. the third portion) of the separator sheet 122, the separator guide 125 moves in a direction toward the second transfer device 142 that is opposite to the moving direction of the second upper nozzle 172, and the other side of the separator sheet 122 is folded, so that the first region 1221 of the separator sheet 122 covers the second electrode 1122.

By repeating the above processes, the electrode assembly manufacturing method according to an example of the present disclosure can be performed, e.g. to sequentially form a plurality of unit cells of the electrode assembly.

When such an electrode assembly manufacturing method according to the examples of the present disclosure is performed, the adhesives are respectively applied to the upper and lower portions (e.g. bottom and top surfaces) of the electrode 11 at the time of stacking the electrode 11 and the separator sheet 122 in a Z-folding type, thereby capable of preventing the electrode 11 from being offset or displaced from a target position.

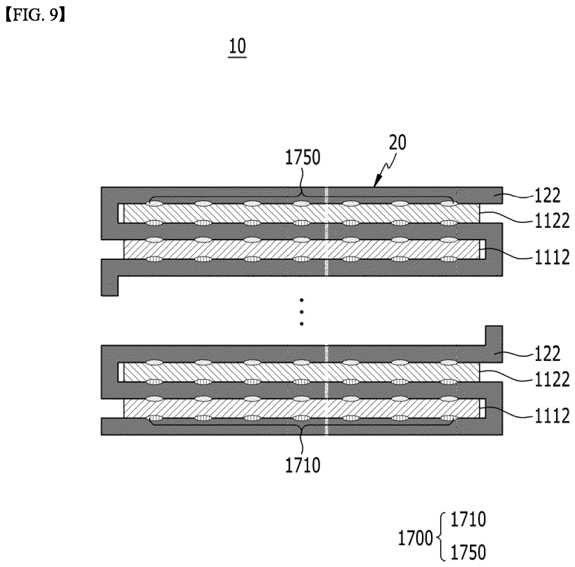

Fig. 9 is a cross-sectional view of an electrode assembly according to an example of the present disclosure.

Referring to Figs. 8 and 9, in the electrode assembly 10 in which electrodes and a separator sheet are alternately stacked according to an example of the present disclosure, the electrodes 11 include a first electrode 1112 and a second electrode 1122, and the separator sheet 122 has a zigzag shape formed by being folded at least twice.

Here, the separator sheet 122 is folded in a state where the first electrode 1112 is seated on the first region 1221 (e.g. the first portion) of the separator sheet 122, so that the second region 1222 (e.g. the second portion) of the separator 122 covers the first electrode 1112. Further, the separator sheet 122 is folded in a state where the second electrode 1122 is seated on the second region 1222 (e.g. the second portion) of the separator sheet 122, so that the first region 1221 (e.g. the third portion) of the separator sheet 122 covers the second electrode 1122.

In particular, the electrode assembly 10 according to the present example may be configured such that the electrodes 11 are stacked one by one on the first region 1221 (e.g. the first, third, ... portion) or the second region 1222 (e.g. the second, fourth, ... portion) of the separator sheet 122. At this time, after measuring the presence or absence of misalignment, the electrodes 11 can be stacked at an accurate position on the separator sheet 122 in a state where the position is corrected if necessary. Thereby, the electrode assembly 10 according to the present example can be further improved in the alignment degree between the electrode 11 and the separator sheet 122.

Here, an adhesive layer 1700 is formed between the electrodes 11 and the separator sheet 122 (i.e. an adhesive is arranged between the separator sheet 122 and the first and/or second electrodes 1112, 1122). More specifically, the adhesive layer 1700 includes a first adhesive layer 1710 and a second adhesive layer 1750. The first adhesive layer 1710 may be located between the lower portion (e.g. bottom surfaces) of the electrodes 11 and the separator sheet 122, and the second adhesive layer 1750 may be located between the upper portion (e.g. top surfaces) of the electrodes 11 and the separator sheet 122.

In one example, the first adhesive layer 1710 and the second adhesive layer 1750 may be formed by applying (e.g. arranging) an adhesive in the form of a plurality of spots (e.g. dots), respectively. However, as described above in the electrode assembly manufacturing apparatus 1, the shapes of the first adhesive layer 1710 and the second adhesive layer 1750 are not limited thereto, and may be formed in various shapes. For example, the first adhesive layer 1710 and/or the second adhesive layer 1750 may additionally or alternatively be formed by applying (e.g. arranging) the adhesive in the form of a plurality of lines (e.g. lines extending along a width or a length of the electrodes 11, for example in the direction of view of Fig. 9).

In specific examples, the first adhesive layer 1710 may be formed such that a diameter of an individual spot (or an individual dot) of the plurality of spots (or dots) of the respective adhesive and/or an individual line of the plurality of lines of the respective adhesive is between 300 µm and 3000 µm, or particularly between 400 µm and 2000 µm, or more particularly between 500 µm and 1200 µm. Additionally or alternatively, the first adhesive layer 1710 may be formed so as to occupy 0.01% to 50%, particularly 0.05% to 30%, and more particularly 0.08% to 1% of a total area of the electrode 1112 in a plan view (normal to the electrode 1112).

In specific examples, the second adhesive layer 1750 may be formed such that a diameter of an individual spot (or an individual dot) of the plurality of spots (or dots) of the respective adhesive and/or an individual line of the plurality of lines of the respective adhesive is between 300 µm and 3000 µm, or particularly between 400 µm and 2000 µm, or more particularly between 500 µm and 1200 µm. Additionally or alternatively, the second adhesive layer 1750 may be formed so as to occupy 0.01% to 50%, particularly 0.05% to 30%, and more particularly 0.08% to 1% of a total area of the electrode 1122 in a plan view (normal to the electrode 1122).

Thereby, the electrode assembly 10 according to the present example forms an adhesive layer 1700 between the electrodes 11 and the separator sheet 122, and thus even in the case of a low-cost separator whose adhesive strength is low, the electrodes 11 and the separator can be stably fixed to each other, thereby capable of preventing the electrodes 11 from being offset or displaced from a target position. In addition, the electrode assembly 10 of the present example covers the upper and lower portions of the electrode 11 in a shape in which a separator sheet 122 is folded, so that the alignment degree of the electrode 11 and the efficiency of the process can be further improved.

Further, since there is no need to perform a laminating process as in the conventional case, it is possible to reduce the defective rate in the process caused by heat and pressure. And, since the laminator can be removed, the volume of the manufacturing apparatus can be reduced and the manufacturing process can be simplified.

The separator sheet 122 (separator) may for example comprise or consist of a flexible and electrically insulating material, in particular a porous, flexible and electrically insulating material, e.g. a resin film such as a polyolefin-based resin film.

The separator according to the example described herein may be a CCS (Ceramic Coated Separator. Generally, the separator may have a raw film and a coating layer formed on at least one surface of the raw film, wherein the coating layer may include alumina powder and a binder for aggregating them. SRS (Safety Reinforced Separator) has a large amount of binder coated on the surface of the coating layer, but CCS may not have the binder coated on the surface of the coating layer, or may have a much lower surface binder content as compared with SRS. For example, e.g. in the case of the CCS separator according to the present example, the content of the binder coated on the surface of the coating layer of the separator may be about 3 wt% or less, in some examples about 2 wt% or less, in one example about 1 wt% or less.

When the separator is CCS, the internal electrode contained in the electrode assembly may be transferred in an unfixed state, and thus alignment may be disturbed during transfer. Of course, when the separator is CCS, it can be fixed with heat and pressure, but the alignment of the internal electrodes may be disturbed even in the process of transferring to the fixing device for heat and pressure after forming the stacked body of the electrode and the separator. Further, there is a disadvantage in that an expensive separator having a high binder content must be used in order to attach the electrode and the separator by heat and pressure. On the contrary, according to the present example, it is possible to increase the fixing force while preventing the alignment of the internal electrodes from being disturbed during transfer.

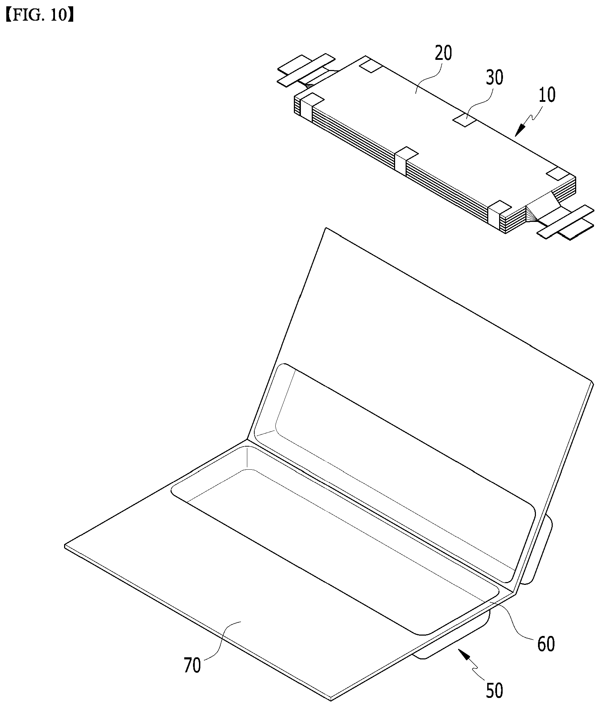

Fig. 10 is an exploded perspective view of a battery cell according to an example of the present disclosure.

Referring to Figs. 2, 9 and 10, a battery cell according to an example of the present disclosure is a battery cell including the electrode assembly 10 described above, wherein the battery cell includes a battery case 50 for housing the electrode assembly 10 together with an electrolytic solution. The adhesive layer 1700 may be dissolved (e.g. partially or entirely) in the electrolytic solution, e.g. by application of heat and/or pressure.

Here, a fixing member such as a fixing tape 30 may be attached to the outside of the electrode assembly 10. Therefore, the stacked alignment state of the electrode 11 and the separator sheet 122 can be maintained. The electrode assembly 10 to which the fixing tape 30 is attached may be referred to as a final electrode assembly 20.

The battery case 50 includes an electrode assembly 10 and a receiving part 60 to which the final electrode assembly 20 is mounted, and a sealing part 70 for sealing the outer periphery of the receiving part 60. In one example, the battery case 50 may be a laminated sheet including a resin layer and a metal layer. More specifically, the battery case 50 may be made of a laminated sheet, and may include an outer resin layer for forming the outermost shell, a blocking metal layer for preventing the penetration of a material, and an inner resin layer for sealing.

Further, the receiving part 60 of the battery case 50 may be configured to house an electrolytic solution together with the electrode assembly 10. Here, the adhesive layer 1700 contained in the electrode assembly 10 may be dissolved into the electrolytic solution. In particular, in the battery cell according to the present example, in an activation step such as a formation step, the adhesive layer 1700 contained in the electrode assembly 10 may be dissolved into an electrolytic solution under high temperature and/or pressure conditions.

More specifically, in the battery cell according to the present example, when the adhesive layer 1700 formed between the electrode 11 of the electrode assembly 10 and the separator sheet 122 is dissolved into the electrolytic solution, the adhesive 14 may hardly remain on the surface of the electrode 11 (e.g. may be dissolved entirely or almost entirely), or may not be completely eliminated (e.g. may only be dissolved partially).

The separator sheet 122 may generally be a porous sheet. In this regard, a part of the adhesive 14 may be permeated into the separator sheet 122. However, even in the case of the adhesive layer 1700 penetrated into the separator sheet 122, it may be mostly dissolved in the electrolytic solution, or may be completely dissolved. In this process, traces of application of the adhesive layer 1700 may remain on the separator sheet 122.

Here, the application trace of the adhesive layer 1700 means that the adhesive component contained in the adhesive layer 1700 does not remain, but a part of the outer surface of the separator sheet 122 is deformed and/or modified by the adhesive layer 1700. However, the present disclosure is not limited thereto, and the application trace of the adhesive layer 1700 may mean traces that can confirm the application or (former) presence of the adhesive in various ways, like traces that can confirm with the naked eye the application of the adhesive. Thereby, the application trace of the adhesive layer 1700 formed on the separator sheet 122 may be formed at the same position as the position where the adhesive is applied (e.g. in a plurality of spots and/or lines).

Therefore, the battery cell according to the present example can prevent the performance degradation and realize excellent battery performance because the adhesive layer 1700 is partially or completely dissolved on the surface of the electrode 11 or the separator 122, and the unreacted region due to the adhesive layer 1700 disappears.

In view of the above, it will be appreciated that the present disclosure also relates to the following examples:
According to an example of the present disclosure, there is provided an apparatus for manufacturing a battery cell, the apparatus comprising: a first electrode reel (e.g. as part of or an example of a first electrode supply unit) on which a first electrode sheet having a plurality of first electrodes formed thereon is unwound; a second electrode reel (e.g. as part of or an example of a second electrode supply unit) on which a second electrode sheet having a plurality of second electrodes formed thereon is unwound; a separator reel (e.g. as part of or an example of a separator supply unit) in which a separator sheet that is folded when the first electrode and the second electrode are seated, covers the electrodes and is stacked with the electrodes is unwound; a table (e.g. as part of or an example of a stacking table) on which the first electrode, the second electrode and the separator sheet are seated on the upper surface; a separator guide that guides a folding direction of the separator sheet; and a pair of upper nozzles (e.g. as part of or an example of first and second adhesive applicators) that apply an adhesive to at least a part of the separator sheet located between the table and the separator guide, wherein the table performs a reciprocating rotating motion (rotation reciprocating motion) between the first electrode reel and the second electrode reel, and wherein the separator guide and the pair of upper nozzles linearly reciprocate left and right on the basis of the table.

The first electrode may be seated on a first region of the separator sheet, and/or the second electrode may be seated on a second region of the separator sheet.

The pair of upper nozzles may include a first upper nozzle (e.g. as part of or an example of a first adhesive applicator) and a second upper nozzle (e.g. as part of or an example of a second adhesive applicator). The first upper nozzle may apply the adhesive to at least a part of the second region of the separator sheet. The second upper nozzle may apply the adhesive to at least a part of the first region of the separator sheet.

When the pair of upper nozzles each apply the adhesive onto the separator sheet, an end part of the first upper nozzle and/or an end part of the second upper nozzle may perform rotational motion in a direction adjacent to the separator sheet.

The first upper nozzle and the second upper nozzle may be arranged on both sides (opposite sides) with the separator guide being interposed therebetween.

The first electrode may be seated on the first region of the separator sheet, and at the same time, the first upper nozzle may linearly move on the second region of the separator sheet. Additionally or alternatively, the second electrode may be seated on the second region of the separator sheet, and at the same time, the second upper nozzle may linearly move on the first region of the separator sheet.

The first upper nozzle may apply the adhesive to at least a part of the second region of the separator sheet, and at the same time, the separator guide may linearly move in a direction toward the second electrode reel. Additionally or alternatively, the second upper nozzle may apply the adhesive to at least a part of the first region of the separator sheet, and at the same time, the separator guide may linearly move in a direction toward the first electrode reel.

When the adhesive application of the first upper nozzle is completed, the separator guide may linearly move in a direction in which the second region of the separator sheet applied with the adhesive covers the first electrode. Additionally or alternatively, when the adhesive application of the second upper nozzle is completed, the separator guide may linearly move in a direction in which the first region of the separator sheet applied with the adhesive covers the second electrode.

The apparatus for manufacturing a battery cell may include a lower nozzle (e.g. as part of or an example of a bottom-side applicator) that applies the adhesive to a lower portion of the first electrode and a lower portion of the second electrode, respectively.

The apparatus for manufacturing a battery cell may further include a first head (or header, e.g. as part of or as an example of a first electrode supply unit, e.g. as part of or an example of a first electrode placement device) that adsorbs the first electrode and seats it on the first region; and/or a second head (or header, e.g. as part of or as an example of a second electrode supply unit, e.g. as part of or an example of a second electrode placement device) that adsorbs the second electrode and seats it on the second region. The first head and/or the second head may perform rotation reciprocating motion in a direction located on the table.

When the first electrode is adsorbed to the first head, the lower nozzle may apply the adhesive to the lower portion of the first electrode. Additionally or alternatively, when the second electrode is adsorbed to the second head, the lower nozzle may apply the adhesive to the lower portion of the second electrode.

The apparatus for manufacturing a battery cell may further include a first transfer device (e.g. as part of or as an example of a first electrode supply unit) that transfers the first electrode toward the table; and/or a second transfer device (e.g. as part of or as an example of a second electrode supply unit) that transfers the second electrode toward the table.

The first transfer device may include a first slit (or groove) that is opened toward the first electrode, so that the lower nozzle can apply the adhesive to the lower portion of the first electrode via the first slit. Additionally or alternatively, the second transfer device may include a second slit that is opened toward the second electrode, so that the lower nozzle can apply the adhesive to the lower portion of the second electrode via the second slit.

According to another example of the present disclosure, there is provided a method for manufacturing a battery cell, the method comprising the steps of: cutting a first electrode sheet unwound from a first electrode reel (e.g. as part of or an example of a first electrode supply unit) to form a plurality of first electrodes; seating a separator sheet unwound from a separator reel (e.g. as part of or an example of a separator supply unit) on a table (e.g. as part of or as an example of a stacking table) along a separator guide; applying an adhesive to a lower portion of the first electrode from a lower nozzle; seating the first electrode on a first region of the separator sheet; applying an adhesive to at least a part of a second region of the separator sheet from a first upper nozzle; and folding the separator sheet in a folding direction guided by the separator guide, so that the second region of the separator sheet applied with the adhesive covers the first electrode.

After the step of covering the upper portion of the first electrode, the method may further include some or all of:
a step of cutting a second electrode sheet unwound from a second electrode reel (e.g. as part of or an example of a second electrode supply unit) to form a plurality of second electrodes; a step of applying an adhesive to a lower portion of a second electrode from a lower nozzle (e.g. as part of or an example of a bottom-side applicator); a step of seating the second electrode on a second region of the separator sheet; a step of applying an adhesive to at least at part of the first region of the separator sheet from a second upper nozzle (e.g. as part of or an example of a second adhesive applicator); and a step of folding the separator sheet in a folding direction guided by the separator guide, so that the first region of the separator sheet applied with the adhesive covers the second electrode.

The table may perform rotation reciprocating motion between the first electrode reel and the second electrode reel. Additionally or alternatively, the separator guide, and/or the pair of the upper nozzle may linearly reciprocate left and right on the basis of the table.

In the step of applying the adhesive by the first upper nozzle and/or the step of applying the adhesive by the second upper nozzle, an end part of the first upper nozzle and/or an end part of the second upper nozzle may perform rotational motion in a direction adjacent to the separator sheet.

According to another example of the present disclosure, there is provided an electrode assembly in which an electrode and a separator sheet are alternately stacked, wherein the electrode comprises a first electrode and a second electrode, wherein the separator sheet has a zigzag shape formed by being folded at least twice, wherein the separator sheet is folded in a state where the first electrode is seated on a first region of the separator sheet, so that a second region of the separator sheet covers the first electrode, and is folded in a state where the second electrode is seated on the second region, so that the first region of the separator sheet covers the second electrode, and wherein an adhesive layer is formed between the electrode and the separator sheet.

The adhesive layer may include a first adhesive layer and/or a second adhesive layer. The first adhesive layer may be located between the lower portion of the electrode and the separator sheet. The second adhesive layer may be located between the upper portion of the electrode and the separator sheet.

The first adhesive layer and/or the second adhesive layer may be respectively formed by applying an adhesive in the form of a plurality of dots.

According to yet another example of the present disclosure, there is provided a battery cell comprising the above-mentioned electrode assembly, wherein the battery cell comprises a battery case that houses an electrode assembly together with an electrolytic solution, and wherein the adhesive layer may be dissolved in the electrolytic solution.

As far as technically feasible, features, elements and/or functionalities of the examples listed above may be combined with, integrated in and/or substituted with any of the features, elements and/or functionalities of any one of the other examples described herein and vice-versa.

Although examples of the present invention have been described in detail above, the scope of the present invention is not limited thereto. Various modifications and improvements made by those skilled in the art using the basic concepts of the present disclosure also fall within the scope of the present invention as defined by the appended claims.

### DESCRIPTION OF REFERENCE NUMERALS

1: cell manufacturing apparatus
11: electrode
16: table
17: nozzle
111: first electrode reel
112: second electrode reel
121: separator reel
122: separator sheet
125: separator guide
131: first cutter
132: second cutter
141: first transfer device
142: second transfer device
151: first head
152: second head
171: first upper nozzle
172: second upper nozzle
1111: first electrode sheet
1112: first electrode
1121: second electrode sheet
1122: second electrode
1221: first region
1222: second region
1710: first adhesive layer
1750: second adhesive layer

## Claims

1. An apparatus (1) for manufacturing an electrode assembly (10) for use in a battery, the apparatus (1) comprising:
a first electrode supply unit (111, 141, 151) configured to provide a plurality of first electrodes (1112);
a second electrode supply unit (112, 142, 152) configured to provide a plurality of second electrodes (1122);
a separator supply unit (121) configured to provide a continuous separator sheet (122);
a stacking table (16) for stacking the first and second electrodes (1112, 1122) thereon with the separator sheet (122) folded between the first and second electrodes (1112, 1122) to form the electrode assembly (10), the stacking table (16) being configured to rotate back and forth between the first electrode supply unit (111, 141, 151) and the second electrode supply unit (112, 142, 152);
a separator guide (125) configured to guide the folding of the separator sheet (122); and
a first adhesive applicator (171) configured to apply an adhesive to at least a part of the separator sheet (122) located between the separator guide (125) and the stacking table (16) and optionally to a first electrode (1112) arranged on the stacking table (16) and/or a second electrode (1122) arranged on the stacking table (16).

2. The apparatus (1) of claim 1, wherein the apparatus (1) further comprises a second adhesive applicator (172) configured to apply an adhesive to at least a part of the separator sheet (122) located between the separator guide (125) and the stacking table (16) and/or to a first electrode (1112) arranged on the stacking table (16) and/or a second electrode (1122) arranged on the stacking table (16), in particular wherein the separator guide (125) is configured to guide the separator sheet (122) such that the first and second adhesive applicators (171, 172) are arranged on opposite sides of the separator sheet (122).

3. The apparatus (1) of claim 2, wherein:
the first electrode supply unit (111, 141, 151) is configured to arrange a first electrode (1112) on a first portion (1221) of the separator sheet (122) and the second electrode supply unit (112, 142, 152) is configured to arrange a second electrode (1122) on a second portion (1222) of the separator sheet (122);
the first adhesive applicator (171) is configured to apply the adhesive to at least a part of said second portion (1222) of the separator sheet (122) and/or to said first electrode (1112) arranged on said first portion (1221) of the separator sheet (122); and
the second adhesive applicator (172) is configured to apply the adhesive to at least a part of said first portion (1221) of the separator sheet (122) and/or to said second electrode (1122) arranged on said second portion (1222) of the separator sheet (122),
in particular wherein:
the first adhesive applicator (171) is configured to apply the adhesive to said part of the second portion (1222) of the separator sheet (122) while the first electrode supply unit (111, 141, 151) arranges the first electrode (1112) on said first portion (1221) of the separator sheet (122); and/or
the second adhesive applicator (171) is configured to apply the adhesive to said part of the first portion (1221) of the separator sheet (122) while the second electrode supply unit (112, 142, 152) arranges the second electrode (1122) on said second portion (1222) of the separator sheet (122).

4. The apparatus (1) of any one of the preceding claims, wherein the separator guide (125), the first adhesive applicator (171) and/or the second adhesive applicator (172) are configured to move back and forth between the first electrode supply unit (111, 141, 151) and the second electrode supply unit (112, 142, 152) along a first direction different from a rotation axis of the stacking table (16), in particular wherein:
the first adhesive applicator (171) and/or the second adhesive applicator (172) is/are configured to apply the adhesive while the separator guide (125) and/or the respective adhesive applicator (171, 172) moves along the first direction from the stacking table (16) towards one of the first and second electrode supply units (111, 141, 151, 112, 142, 152); and/or
the separator guide (125) is configured to, when a first or second electrode (1112, 1122) has been arranged on a portion of the separator sheet (122) and the first and second adhesive applicator (171, 172), respectively, has applied the adhesive to at least a part of an adjacent portion (1221, 1222) of the separator sheet (122) and/or to said electrode (1112, 1122) arranged on the separator sheet (122), move along the first direction to cover said electrode (1112, 1122) arranged on the separator sheet (122) with said adjacent portion (1221, 1222) of the separator sheet (122).

5. The apparatus (1) of any one of the preceding claims, wherein the first adhesive applicator (171) and/or the second adhesive applicator (172) each are configured to:
rotate for orienting the respective adhesive applicator (171, 172) relative to the separator sheet (122) and/or to stacking table (16); and/or
move along the first direction and/or along a second direction different from the first direction and from the rotation axis of the stacking table (16) for adjusting a distance between the respective adhesive applicator (171, 172) and the separator sheet (122) and/or a distance between the respective adhesive applicator (171, 172) and the stacking table (16).

6. The apparatus (1) of any one of the preceding claims, further comprising one or more bottom-side applicators (173) configured to apply an adhesive to a surface of a first electrode (1112) and/or a second electrode (1122), wherein said surface is to face the stacking table (16) when the respective electrode (1112, 1122) is arranged thereon, in particular wherein:
the first electrode supply unit (111, 141, 151) and/or the second electrode supply unit (111, 141, 151) each comprise an electrode placement device (151, 152) that is configured to hold a first and second electrode (1112, 1122), respectively, and to place said electrode (1112, 1122) on the stacking table (16), wherein one of said one or more bottom-side applicators (173) is configured to apply the adhesive to said surface of said electrode (1112, 1122) while the electrode (1112, 1122) is being held by said electrode placement device (151, 152); and/or
the first electrode supply unit (111, 141, 151) and/or the second electrode supply unit (111, 141, 151) each comprise a transfer device (141, 142) configured to transfer a first and second electrode (1112, 1122), respectively, on a transfer surface of said transfer device (141, 142) towards the stacking table (16), wherein said transfer surface comprises an opening (141a') and one of said one or more bottom-side applicators (173) is configured to apply the adhesive to said surface of the electrode (1112, 1122) through said opening (141a').

7. The apparatus (1) of any one of the preceding claims, wherein the first adhesive applicator (171) and/or the second adhesive applicator (172) is/are configured to apply the adhesive by applying a plurality of spots of the adhesive and/or a plurality of lines of the adhesive.

8. The apparatus (1) of any one of the preceding claims, wherein:
the first electrode supply unit (111, 141, 151) is or comprises a first electrode reel (111) on which a first electrode sheet (1111) having a plurality of first electrodes (1112) formed thereon is unwound;
the second electrode supply unit (112, 142, 152) is or comprises a second electrode reel (112) on which a second electrode sheet (1121) having a plurality of second electrodes (1122) formed thereon is unwound;
the separator supply unit (121) is or comprises a separator reel (121) in which a separator sheet (122) that is folded when the first electrode (1112) and the second electrode (1122) are seated, covers the electrodes (1112, 1122) and is stacked with the electrodes (1112, 1122) is unwound;
the stacking table (16) is or comprises a table (16) on which the first electrode (1112), the second electrode (1122) and the separator sheet (122) are seated on the upper surface;
the separator guide (125) guides a folding direction of the separator sheet (122);
the first adhesive applicator (171) is or comprises a pair of upper nozzles (171, 172) that apply an adhesive to at least a part of the separator sheet (122) located between the table (16) and the separator guide (125);
the table (16) performs a reciprocating rotating motion between the first electrode reel (111) and the second electrode reel (112); and
the separator guide (125) and the pair of upper nozzles (171, 172) linearly reciprocate left and right on the basis of the table (16).

9. A method of manufacturing an electrode assembly (10) for use in a battery, the method comprising the steps of:
arranging a first portion (1221) of a continuous separator sheet (122) on a stacking table (16);
arranging a first electrode (1112) on said first portion (1221) of the separator sheet (122) using a first electrode supply unit (111, 141, 151);
applying an adhesive to at least a part of a second portion (1222) of said separator sheet (122) and optionally to said first electrode (1112) using a first adhesive applicator (171); and
folding said separator sheet (122) to cover said first electrode (1112) arranged on the first portion (1221) with said second portion (1222) of the separator sheet (122) with the adhesive being arranged between said first electrode (1112) and said second portion (1222), wherein the separator sheet (122) is folded using a separator guide (125) to guide the separator sheet (122),
wherein the stacking table (16) is rotated from the first electrode supply unit (111, 141, 151) towards a second electrode supply unit (112, 142, 152) for providing a second electrode (1122) while applying the adhesive and/or while folding said separator sheet (122),
wherein the first electrode (1112) is arranged on the first portion (1221) of the separator sheet (122) while applying the adhesive to said part of the second portion (1221) of the separator sheet (122).

10. The method of claim 9, wherein after folding said separator sheet (122) to cover said first electrode (1112), the method further comprises:
arranging a second electrode (1122) on said second portion (1222) of the separator sheet (122) using the second electrode supply unit (112, 142, 152);
applying an adhesive to at least a part of a third portion (1221) of said separator sheet (122) and/or to said second electrode (1122) using a second adhesive applicator (172); and
folding said separator sheet (122) to cover said second electrode (1122) arranged on the second portion (1222) with said third portion (1221) of the separator sheet (122) with the adhesive being arranged between said second electrode (1122) and said third portion (1221), wherein the separator sheet (122) is folded using the separator guide (125) to guide the separator sheet (122),
in particular wherein:
the stacking table (16) is rotated from the second electrode supply unit (112, 142, 152) towards the first electrode supply unit (111, 141, 151) while applying the adhesive using the second adhesive applicator (171) and/or while folding said separator sheet (122) to cover said second electrode (1122); and/or
the second electrode (1122) is arranged on the second portion (1222) of the separator sheet (122) while applying the adhesive to said part of the third portion (1221) of the separator sheet (122).

11. The method of claim 9 or 10, wherein:
the method further comprises moving said separator guide (125), the first adhesive applicator (171) and/or the second adhesive applicator (172) between the first electrode supply unit (111, 141, 151) and the second electrode supply unit (112, 142, 152) along a first direction different from a rotation axis of the stacking table (16), in particular wherein the adhesive applied using the first adhesive applicator (171) is applied while the separator guide (125) and/or the first adhesive applicator (171) move towards the second electrode supply unit (112, 142, 152) and/or the adhesive applied using the second adhesive applicator (172) is applied while the separator guide (125) and/or the second adhesive applicator (172) move towards the first electrode supply unit (111, 141, 151); and/or
the method further comprises rotating the first adhesive applicator (171) and/or the second adhesive applicator (172) to orient the respective adhesive applicator (171, 172) relative to the separator sheet (122) and/or to the stacking table (16) and/or moving the first adhesive applicator (171) and/or the second adhesive applicator (172) in a direction different from the rotation axis of the stacking table (16) to adjust a distance between the respective adhesive applicator (171, 172) and the separator sheet (122) and/or a distance between the respective adhesive applicator (171, 172) and the stacking table (16).

12. The method of any one of claims 9 to 11, wherein:
the method comprises cutting a first electrode sheet (1111) unwound from a first electrode reel (111) to form a plurality of first electrodes (1112);
the step of arranging said first portion (1221) of the separator sheet (122) is or comprises seating the separator sheet (122) unwound from a separator reel (121) on a table along a separator guide (125);
the method comprises applying an adhesive to a lower portion of the first electrode (1112) from a lower nozzle;
the step of arranging the first electrode (1112) on said first portion (1221) of the separator sheet (122) is or comprises seating the first electrode (1112) on a first region (1221) of the separator sheet (122);
the step of applying said adhesive to said part of the second portion (1222) of the separator sheet and/or to said first electrode (1112) is or comprises applying the adhesive to at least a part of a second region (1222) of the separator sheet (122) from a first upper nozzle (171); and
the step of folding said separator sheet (122) to cover said first electrode (1112) is or comprises folding the separator sheet (122) in a folding direction guided by the separator guide (125), so that the second region (1222) of the separator sheet (122) applied with the adhesive covers the first electrode (1112).

13. An electrode assembly (10) for use in a battery, the electrode assembly (10) comprising a plurality of first electrodes (1112) and a plurality of second electrodes (1122), wherein:
the first and second electrodes (1112, 1122) are alternately stacked and separated from each other by a separator sheet (122) that is folded between the first and second electrodes (1112, 1122) in a zigzag shape; and
an adhesive is arranged between the separator sheet (122) and the first electrodes (1112) and/or between the separator sheet (122) and the second electrodes (1122), wherein some or all of said adhesive is arranged in a plurality of spots and/or lines, wherein for some or all of the first and second electrodes, the adhesive is arranged in between 5 and 20 lines and/or in between 10 and 200 spots between a surface of the respective electrode and the separator sheet.

14. The electrode assembly (10) of claim 13, wherein:
for some or all of the first and second electrodes (1112, 1122), the adhesive covers between 0.01% and 50%, preferably between 2% and 20% of a cross-sectional area of a contact surface between the separator sheet (122) and the respective electrode (1112, 1122); and/or
at least some of said adhesive was arranged between the separator sheet (122) and the first and/or second electrodes (1112, 1122) by applying the adhesive to a surface of the respective electrode (1112, 1122) prior to arranging said surface on the separator sheet (122) and/or covering said surface with the separator sheet (122), wherein some or all of said adhesive was arranged between the separator sheet (122) and the first and/or second electrodes (1112, 1122) by applying the adhesive to a first surface of the respective electrode (1112, 1122) prior to arranging said first surface on the separator sheet (122) and applying the adhesive to a portion (1221, 1222) of the separator sheet (122) prior to covering a second surface of the respective electrode (1112, 1122) opposite to the first surface with said portion (1221, 1222) of the separator sheet (122).

15. A battery cell comprising an electrode assembly (10) according to claim 13 or 14 and a battery case (50) housing the electrode assembly (10) together with an electrolytic solution, wherein the adhesive has been dissolved in the electrolytic solution at least in part.

## Patentansprüche

1. Vorrichtung (1) zum Herstellen einer Elektrodenanordnung (10) zur Verwendung in einer Batterie, wobei die Vorrichtung (1) umfasst:
eine erste Elektrodenversorgungseinheit (111, 141, 151), die konfiguriert ist, um mehrere erste Elektroden (1112) bereitzustellen;
eine zweite Elektrodenversorgungseinheit (112, 142, 152), die konfiguriert ist, um mehrere zweite Elektroden (1122) bereitzustellen;
eine Separatorversorgungseinheit (121), die konfiguriert ist, um eine kontinuierliche Separatorfolie (122) bereitzustellen;
einen Stapeltisch (16) zum Stapeln der ersten und den zweiten Elektroden (1112, 1122) darauf, wobei die Separatorfolie (122) zwischen den ersten und den zweiten Elektroden (1112, 1122) gefaltet ist, um die Elektrodenanordnung (10) zu bilden, wobei der Stapeltisch (16) konfiguriert ist, um sich zwischen der ersten Elektrodenversorgungseinheit (111, 141, 151) und der zweiten Elektrodenversorgungseinheit (112, 142, 152) vor und zurück zu drehen;
eine Separatorführung (125), die konfiguriert ist, um das Falten der Separatorfolie (122) zu führen; und
einen ersten Klebstoffapplikator (171), der konfiguriert ist, um einen Klebstoff auf mindestens einen Teil der Separatorfolie (122), der sich zwischen der Separatorführung (125) und dem Stapeltisch (16) befindet, und optional auf eine erste Elektrode (1112), die auf dem Stapeltisch (16) angeordnet ist, und/oder eine zweite Elektrode (1122), die auf dem Stapeltisch (16) angeordnet ist, aufzubringen.

2. Vorrichtung (1) nach Anspruch 1, wobei die Vorrichtung (1) ferner einen zweiten Klebstoffapplikator (172) umfasst, der konfiguriert ist, um einen Klebstoff auf mindestens einen Teil der Separatorfolie (122), der sich zwischen der Separatorführung (125) und dem Stapeltisch (16) befindet, und/oder auf eine erste Elektrode (1112), die auf dem Stapeltisch (16) angeordnet ist, und/oder eine zweite Elektrode (1122), die auf dem Stapeltisch (16) angeordnet ist, aufzubringen, insbesondere wobei die Separatorführung (125) konfiguriert ist, um die Separatorfolie (122) derart zu führen, dass der erste und der zweite Klebstoffapplikator (171, 172) auf gegenüberliegenden Seiten der Separatorfolie (122) angeordnet sind.

3. Vorrichtung (1) nach Anspruch 2, wobei:
die erste Elektrodenversorgungseinheit (111, 141, 151) konfiguriert ist, um eine erste Elektrode (1112) auf einem ersten Abschnitt (1221) der Separatorfolie (122) anzuordnen, und die zweite Elektrodenversorgungseinheit (112, 142, 152) konfiguriert ist, um eine zweite Elektrode (1122) auf einem zweiten Abschnitt (1222) der Separatorfolie (122) anzuordnen;
der erste Klebstoffapplikator (171) konfiguriert ist, um den Klebstoff auf mindestens einen Teil des zweiten Abschnitts (1222) der Separatorfolie (122) und/oder auf die erste Elektrode (1112), die auf dem ersten Abschnitt (1221) der Separatorfolie (122) angeordnet ist, aufzubringen; und
der zweite Klebstoffapplikator (172) konfiguriert ist, um den Klebstoff auf mindestens einen Teil des ersten Abschnitts (1221) der Separatorfolie (122) und/oder auf die zweite Elektrode (1122), die auf dem zweiten Abschnitt (1222) der Separatorfolie (122) angeordnet ist, aufzubringen,
insbesondere wobei:
der erste Klebstoffapplikator (171) konfiguriert ist, um den Klebstoff auf den Teil des zweiten Abschnitts (1222) der Separatorfolie (122) aufzubringen, während die erste Elektrodenversorgungseinheit (111, 141, 151) die erste Elektrode (1112) auf dem ersten Abschnitt (1221) der Separatorfolie (122) anordnet; und/oder
der zweite Klebstoffapplikator (171) konfiguriert ist, um den Klebstoff auf den Teil des ersten Abschnitts (1221) der Separatorfolie (122) aufzubringen, während die zweite Elektrodenversorgungseinheit (112, 142, 152) die zweite Elektrode (1122) auf dem zweiten Abschnitt (1222) der Separatorfolie (122) anordnet.

4. Vorrichtung (1) nach einem der vorhergehenden Ansprüche, wobei die Separatorführung (125), der erste Klebstoffapplikator (171) und/oder der zweite Klebstoffapplikator (172) konfiguriert sind, um sich zwischen der ersten Elektrodenversorgungseinheit (111, 141, 151) und der zweiten Elektrodenversorgungseinheit (112, 142, 152) entlang einer ersten Richtung, die von einer Drehachse des Stapeltischs (16) verschieden ist, vor und zurück zu bewegen, insbesondere wobei:
der erste Klebstoffapplikator (171) und/oder der zweite Klebstoffapplikator (172) konfiguriert ist/sind, um den Klebstoff aufzubringen, während sich die Separatorführung (125) und/oder der jeweilige Klebstoffapplikator (171, 172) entlang der ersten Richtung von dem Stapeltisch (16) zu einer der ersten und der zweiten Elektrodenversorgungseinheit (111, 141, 151, 112, 142, 152) bewegt; und/oder
die Separatorführung (125) konfiguriert ist, um sich, wenn eine erste oder zweite Elektrode (1112, 1122) auf einem Abschnitt der Separatorfolie (122) angeordnet wurde und der erste bzw. zweite Klebstoffapplikator (171, 172) den Klebstoff auf mindestens einen Teil eines benachbarten Abschnitts (1221, 1222) der Separatorfolie (122) und/oder auf die Elektrode (1112, 1122), die auf der Separatorfolie (122) angeordnet ist, aufgebracht hat, entlang der ersten Richtung zu bewegen, um die Elektrode (1112, 1122), die auf der Separatorfolie (122) angeordnet ist, mit dem benachbarten Abschnitt (1221, 1222) der Separatorfolie (122) zu bedecken.

5. Vorrichtung (1) nach einem der vorhergehenden Ansprüche, wobei der erste Klebstoffapplikator (171) und/oder der zweite Klebstoffapplikator (172) jeweils konfiguriert sind, um:
sich zu drehen, um den jeweiligen Klebstoffapplikator (171, 172) relativ zu der Separatorfolie (122) und/oder zu dem Stapeltisch (16) auszurichten; und/oder
sich entlang der ersten Richtung und/oder entlang einer zweiten Richtung, die von der ersten Richtung und von der Drehachse des Stapeltischs (16) verschieden ist, zu bewegen, um einen Abstand zwischen dem jeweiligen Klebstoffapplikator (171, 172) und der Separatorfolie (122) und/oder einen Abstand zwischen dem jeweiligen Klebstoffapplikator (171, 172) und dem Stapeltisch (16) einzustellen.

6. Vorrichtung (1) nach einem der vorhergehenden Ansprüche, ferner umfassend einen oder mehrere Unterseitenapplikatoren (173), die konfiguriert sind, um einen Klebstoff auf eine Oberfläche einer ersten Elektrode (1112) und/oder einer zweiten Elektrode (1122) aufzubringen, wobei die Oberfläche dem Stapeltisch (16) zugewandt sein soll, wenn die jeweilige Elektrode (1112, 1122) darauf angeordnet ist, insbesondere wobei:
die erste Elektrodenversorgungseinheit (111, 141, 151) und/oder die zweite Elektrodenversorgungseinheit (111, 141, 151) jeweils eine Elektrodenplatzierungsvorrichtung (151, 152) umfassen, die konfiguriert ist, um eine erste bzw. zweite Elektrode (1112, 1122) zu halten und die Elektrode (1112, 1122) auf dem Stapeltisch (16) zu platzieren, wobei einer des einen oder der mehreren Unterseitenapplikatoren (173) konfiguriert ist, um den Klebstoff auf die Oberfläche der Elektrode (1112, 1122) aufzubringen, während die Elektrode (1112, 1122) von der Elektrodenplatzierungsvorrichtung (151, 152) gehalten wird; und/oder
die erste Elektrodenversorgungseinheit (111, 141, 151) und/oder die zweite Elektrodenversorgungseinheit (111, 141, 151) jeweils eine Übertragungsvorrichtung (141, 142) umfassen, die konfiguriert ist, um eine erste bzw. zweite Elektrode (1112, 1122) auf einer Übertragungsoberfläche der Übertragungsvorrichtung (141, 142) zu dem Stapeltisch (16) zu übertragen, wobei die Übertragungsoberfläche eine Öffnung (141a') umfasst und einer des einen oder der mehreren Unterseitenapplikatoren (173) konfiguriert ist, um den Klebstoff auf die Oberfläche der Elektrode (1112, 1122) durch die Öffnung (141a') aufzubringen.

7. Vorrichtung (1) nach einem der vorhergehenden Ansprüche, wobei der erste Klebstoffapplikator (171) und/oder der zweite Klebstoffapplikator (172) konfiguriert ist/sind, um den Klebstoff durch Aufbringen mehrerer Punkte des Klebstoffs und/oder mehrerer Linien des Klebstoffs aufzubringen.

8. Vorrichtung (1) nach einem der vorhergehenden Ansprüche, wobei:
die erste Elektrodenversorgungseinheit (111, 141, 151) eine erste Elektrodenspule (111) ist oder umfasst, auf der eine erste Elektrodenfolie (1111) mit mehreren darauf gebildeten ersten Elektroden (1112) abgewickelt wird;
die zweite Elektrodenversorgungseinheit (112, 142, 152) eine zweite Elektrodenspule (112) ist oder umfasst, auf der eine zweite Elektrodenfolie (1121) mit mehreren darauf gebildeten zweiten Elektroden (1122) abgewickelt wird;
die Separatorversorgungseinheit (121) eine Separatorspule (121) ist oder umfasst, in der eine Separatorfolie (122), die gefaltet wird, wenn die erste Elektrode (1112) und die zweite Elektrode (1122) sitzen, die Elektroden (1112, 1122) bedeckt und mit den Elektroden (1112, 1122) gestapelt wird, abgewickelt wird;
der Stapeltisch (16) ein Tisch (16) ist oder umfasst, auf dem die erste Elektrode (1112), die zweite Elektrode (1122) und die Separatorfolie (122) auf der oberen Oberfläche sitzen;
die Separatorführung (125) eine Faltrichtung der Separatorfolie (122) führt;
der erste Klebstoffapplikator (171) ein Paar oberer Düsen (171, 172) ist oder umfasst, die einen Klebstoff auf mindestens einen Teil der Separatorfolie (122), der sich zwischen dem Tisch (16) und der Separatorführung (125) befindet, aufbringen;
der Tisch (16) eine hin- und hergehende Drehbewegung zwischen der ersten Elektrodenspule (111) und der zweiten Elektrodenspule (112) ausführt; und
die Separatorführung (125) und das Paar oberer Düsen (171, 172) sich auf der Basis des Tischs (16) linear nach links und rechts hin- und herbewegen.

9. Verfahren zum Herstellen einer Elektrodenanordnung (10) zur Verwendung in einer Batterie, wobei das Verfahren die folgenden Schritte umfasst:
Anordnen eines ersten Abschnitts (1221) einer kontinuierlichen Separatorfolie (122) auf einem Stapeltisch (16);
Anordnen einer ersten Elektrode (1112) auf dem ersten Abschnitt (1221) der Separatorfolie (122) unter Verwendung einer ersten Elektrodenversorgungseinheit (111, 141, 151);
Aufbringen eines Klebstoffs auf mindestens einen Teil eines zweiten Abschnitts (1222) der Separatorfolie (122) und optional auf die erste Elektrode (1112) unter Verwendung eines ersten Klebstoffapplikators (171); und
Falten der Separatorfolie (122), um die erste Elektrode (1112), die auf dem ersten Abschnitt (1221) angeordnet ist, mit dem zweiten Abschnitt (1222) der Separatorfolie (122) zu bedecken, wobei der Klebstoff zwischen der ersten Elektrode (1112) und dem zweiten Abschnitt (1222) angeordnet ist, wobei die Separatorfolie (122) unter Verwendung einer Separatorführung (125) gefaltet wird, um die Separatorfolie (122) zu führen,
wobei der Stapeltisch (16) von der ersten Elektrodenversorgungseinheit (111, 141, 151) zu einer zweiten Elektrodenversorgungseinheit (112, 142, 152) gedreht wird, um eine zweite Elektrode (1122) bereitzustellen, während der Klebstoff aufgebracht wird und/oder während die Separatorfolie (122) gefaltet wird,
wobei die erste Elektrode (1112) auf dem ersten Abschnitt (1221) der Separatorfolie (122) angeordnet ist, während der Klebstoff auf den Teil des zweiten Abschnitts (1221) der Separatorfolie (122) aufgebracht wird.

10. Verfahren nach Anspruch 9, wobei nach dem Falten der Separatorfolie (122), um die erste Elektrode (1112) zu bedecken, das Verfahren ferner Folgendes umfasst:
Anordnen einer zweiten Elektrode (1122) auf dem zweiten Abschnitt (1222) der Separatorfolie (122) unter Verwendung der zweiten Elektrodenversorgungseinheit (112, 142, 152);
Aufbringen eines Klebstoffs auf mindestens einen Teil eines dritten Abschnitts (1221) der Separatorfolie (122) und/oder auf die zweite Elektrode (1122) unter Verwendung eines zweiten Klebstoffapplikators (172); und
Falten der Separatorfolie (122), um die zweite Elektrode (1122), die auf dem zweiten Abschnitt (1222) angeordnet ist, mit dem dritten Abschnitt (1221) der Separatorfolie (122) zu bedecken, wobei der Klebstoff zwischen der zweiten Elektrode (1122) und dem dritten Abschnitt (1221) angeordnet ist, wobei die Separatorfolie (122) unter Verwendung der Separatorführung (125) gefaltet wird, um die Separatorfolie (122) zu führen,
insbesondere wobei:
der Stapeltisch (16) von der zweiten Elektrodenversorgungseinheit (112, 142, 152) zu der ersten Elektrodenversorgungseinheit (111, 141, 151) gedreht wird, während der Klebstoff unter Verwendung des zweiten Klebstoffapplikators (171) aufgebracht wird und/oder während die Separatorfolie (122) gefaltet wird, um die zweite Elektrode (1122) zu bedecken; und/oder
die zweite Elektrode (1122) auf dem zweiten Abschnitt (1222) der Separatorfolie (122) angeordnet ist, während der Klebstoff auf den Teil des dritten Abschnitts (1221) der Separatorfolie (122) aufgebracht wird.

11. Verfahren nach Anspruch 9 oder 10, wobei:
das Verfahren ferner das Bewegen der Separatorführung (125), des ersten Klebstoffapplikators (171) und/oder des zweiten Klebstoffapplikators (172) zwischen der ersten Elektrodenversorgungseinheit (111, 141, 151) und der zweiten Elektrodenversorgungseinheit (112, 142, 152) entlang einer ersten Richtung, die von einer Drehachse des Stapeltischs (16) verschieden ist, umfasst, insbesondere wobei der Klebstoff, der unter Verwendung des ersten Klebstoffapplikators (171) aufgebracht wird, aufgebracht wird, während sich die Separatorführung (125) und/oder der erste Klebstoffapplikator (171) zu der zweiten Elektrodenversorgungseinheit (112, 142, 152) bewegt und/oder der Klebstoff, der unter Verwendung des zweiten Klebstoffapplikators (172) aufgebracht wird, aufgebracht wird, während sich die Separatorführung (125) und/oder der zweite Klebstoffapplikator (172) zu der ersten Elektrodenversorgungseinheit (111, 141, 151) bewegt; und/oder
das Verfahren ferner das Drehen des ersten Klebstoffapplikators (171) und/oder des zweiten Klebstoffapplikators (172), um den jeweiligen Klebstoffapplikator (171, 172) relativ zu der Separatorfolie (122) und/oder zu dem Stapeltisch (16) auszurichten, und/oder das Bewegen des ersten Klebstoffapplikators (171) und/oder des zweiten Klebstoffapplikators (172) in einer Richtung, die von der Drehachse des Stapeltischs (16) verschieden ist, umfasst, um einen Abstand zwischen dem jeweiligen Klebstoffapplikator (171, 172) und der Separatorfolie (122) und/oder einen Abstand zwischen dem jeweiligen Klebstoffapplikator (171, 172) und dem Stapeltisch (16) einzustellen.

12. Verfahren nach einem der Ansprüche 9 bis 11, wobei:
das Verfahren das Schneiden einer ersten Elektrodenfolie (1111), die von einer ersten Elektrodenspule (111) abgewickelt wird, um mehrere erste Elektroden (1112) zu bilden, umfasst;
der Schritt des Anordnens des ersten Abschnitts (1221) der Separatorfolie (122) das Platzieren der Separatorfolie (122), die von einer Separatorspule (121) abgewickelt wird, auf einem Tisch entlang einer Separatorführung (125) ist oder umfasst;
das Verfahren das Aufbringen eines Klebstoffs auf einen unteren Abschnitt der ersten Elektrode (1112) von einer unteren Düse umfasst;
der Schritt des Anordnens der ersten Elektrode (1112) auf dem ersten Abschnitt (1221) der Separatorfolie (122) das Platzieren der ersten Elektrode (1112) auf einem ersten Bereich (1221) der Separatorfolie (122) ist oder umfasst;
der Schritt des Aufbringens des Klebstoffs auf den Teil des zweiten Abschnitts (1222) der Separatorfolie und/oder auf die erste Elektrode (1112) das Aufbringen des Klebstoffs auf mindestens einen Teil eines zweiten Bereichs (1222) der Separatorfolie (122) von einer ersten oberen Düse (171) ist oder umfasst; und
der Schritt des Faltens der Separatorfolie (122), um die erste Elektrode (1112) zu bedecken, das Falten der Separatorfolie (122) in einer Faltrichtung, die von der Separatorführung (125) geführt wird, ist oder umfasst, so dass der zweite Bereich (1222) der Separatorfolie (122), der mit dem Klebstoff aufgebracht wird, die erste Elektrode (1112) bedeckt.

13. Elektrodenanordnung (10) zur Verwendung in einer Batterie, wobei die Elektrodenanordnung (10) mehrere erste Elektroden (1112) und mehrere zweite Elektroden (1122) umfasst, wobei:
die ersten und zweiten Elektroden (1112, 1122) abwechselnd gestapelt und durch eine Separatorfolie (122) voneinander getrennt sind, die zwischen den ersten und zweiten Elektroden (1112, 1122) in einer Zickzackform gefaltet ist; und
ein Klebstoff zwischen der Separatorfolie (122) und den ersten Elektroden (1112) und/oder zwischen der Separatorfolie (122) und den zweiten Elektroden (1122) angeordnet ist, wobei ein Teil oder der gesamte Klebstoff in mehreren Punkten und/oder Linien angeordnet ist, wobei für einige oder alle der ersten und zweiten Elektroden der Klebstoff in zwischen 5 und 20 Linien und/oder in zwischen 10 und 200 Punkten zwischen einer Oberfläche der jeweiligen Elektrode und der Separatorfolie angeordnet ist.

14. Elektrodenanordnung (10) nach Anspruch 13, wobei:
für einige oder alle der ersten und zweiten Elektroden (1112, 1122) der Klebstoff zwischen 0,01 % und 50 %, vorzugsweise zwischen 2 % und 20 % einer Querschnittsfläche einer Kontaktfläche zwischen der Separatorfolie (122) und der jeweiligen Elektrode (1112, 1122) bedeckt; und/oder
mindestens ein Teil des Klebstoffs zwischen der Separatorfolie (122) und den ersten und/oder zweiten Elektroden (1112, 1122) angeordnet wurde, indem der Klebstoff auf eine Oberfläche der jeweiligen Elektrode (1112, 1122) aufgebracht wurde, bevor die Oberfläche auf der Separatorfolie (122) angeordnet wurde, und/oder die Oberfläche mit der Separatorfolie (122) bedeckt wurde, wobei ein Teil oder der gesamte Klebstoff zwischen der Separatorfolie (122) und den ersten und/oder zweiten Elektroden (1112, 1122) angeordnet wurde, indem der Klebstoff auf eine erste Oberfläche der jeweiligen Elektrode (1112, 1122) aufgebracht wurde, bevor die erste Oberfläche auf der Separatorfolie (122) angeordnet wurde, und der Klebstoff auf einen Abschnitt (1221, 1222) der Separatorfolie (122) aufgebracht wurde, bevor eine zweite Oberfläche der jeweiligen Elektrode (1112, 1122) gegenüber der ersten Oberfläche mit dem Abschnitt (1221, 1222) der Separatorfolie (122) bedeckt wurde.

15. Batteriezelle, umfassend eine Elektrodenanordnung (10) nach Anspruch 13 oder 14 und ein Batteriegehäuse (50), das die Elektrodenanordnung (10) zusammen mit einer Elektrolytlösung aufnimmt, wobei der Klebstoff mindestens teilweise in der Elektrolytlösung gelöst wurde.

## Revendications

1. Appareil (1) pour la fabrication d'un ensemble d'électrodes (10) à utiliser dans une batterie, l'appareil (1) comprenant :
un distributeur de première électrode (111, 141, 151) configuré pour fournir une pluralité de premières électrodes (1112);
un distributeur de deuxième électrode (112, 142, 152) configuré pour fournir une pluralité de deuxièmes électrodes (1122);
un distributeur de séparateur (121) configuré pour fournir une feuille séparatrice continue (122) ;
un plateau d'empilage (16) pour empiler les premières et deuxièmes électrodes (1112, 1122) sur celui-ci avec la feuille séparatrice (122) pliée entre les premières et deuxièmes électrodes (1112, 1122) afin de former l'ensemble d'électrodes (10), le plateau d'empilage (16) étant configuré pour tourner dans les deux sens entre le distributeur de première électrode (111, 141, 151) et le distributeur de deuxième électrode (112, 142, 152);
un guide de séparateur (125) configuré pour guider le pliage de la feuille séparatrice (122) ; et
un premier applicateur d'adhésif (171) configuré pour appliquer un adhésif sur au moins une partie de la feuille séparatrice (122) située entre le guide de séparateur (125) et le plateau d'empilage (16) et, en option, sur une première électrode (1112) disposée sur le plateau d'empilage (16) et/ou une deuxième électrode (1122) disposée sur le plateau d'empilage (16).

2. Appareil (1) selon la revendication 1, l'appareil (1) comprenant en outre un deuxième applicateur d'adhésif (172) configuré pour appliquer un adhésif sur au moins une partie de la feuille séparatrice (122) située entre le guide de séparateur (125) et le plateau d'empilage (16) et/ou à une première électrode (1112) disposée sur le plateau d'empilage (16) et/ou une deuxième électrode (1122) disposée sur le plateau d'empilage (16), en particulier le guide de séparateur (125) étant configuré pour guider la feuille séparatrice (122) de sorte que les premier et deuxième applicateurs d'adhésif (171, 172) soient disposés sur des côtés opposés de la feuille séparatrice (122).

3. Appareil (1) selon la revendication 2,
le distributeur de première électrode (111, 141, 151) étant configuré pour disposer une première électrode (1112) sur une première partie (1221) de la feuille séparatrice (122) et le distributeur de deuxième électrode (112, 142, 152) étant configuré pour disposer une deuxième électrode (1122) sur une deuxième partie (1222) de la feuille séparatrice (122);
le premier applicateur d'adhésif (171) étant configuré pour appliquer l'adhésif sur au moins une partie de ladite deuxième partie (1222) de la feuille séparatrice (122) et/ou sur ladite première électrode (1112) disposée sur ladite première partie (1221) de la feuille séparatrice (122) ; et
le deuxième applicateur d'adhésif (172) étant configuré pour appliquer l'adhésif sur au moins un élément de ladite première partie (1221) de la feuille séparatrice (122) et/ou sur ladite deuxième électrode (1122) disposée sur ladite deuxième partie (1222) de la feuille séparatrice (122),
en particulier :
le premier applicateur d'adhésif (171) étant configuré pour appliquer l'adhésif sur ledit élément de la deuxième partie (1222) de la feuille séparatrice (122) tandis que le distributeur de première électrode (111, 141, 151) dispose la première électrode (1112) sur ladite première partie (1221) de la feuille séparatrice (122) ; et/ou
le deuxième applicateur d'adhésif (171) étant configuré pour appliquer l'adhésif sur ledit élément de la première partie (1221) de la feuille séparatrice (122) tandis que le distributeur de deuxième électrode (112, 142, 152) dispose la deuxième électrode (1122) sur ladite deuxième partie (1222) de la feuille séparatrice (122).

4. Appareil (1) selon une quelconque des revendications précédentes, le guide séparateur (125), le premier applicateur d'adhésif (171) et/ou le deuxième applicateur d'adhésif (172) étant configurés pour se déplacer dans les deux sens entre le distributeur de première électrode (111, 141, 151) et le distributeur de deuxième électrode (112, 142, 152) le long d'une première direction différente d'un axe de rotation du plateau d'empilage (16), en particulier :
le premier applicateur d'adhésif (171) et/ou le deuxième applicateur d'adhésif (172) est/sont configuré(s) pour appliquer l'adhésif, tandis que le guide de séparateur (125) et/ou l'applicateur d'adhésif respectif (171, 172) se déplace(nt) le long de la première direction du plateau d'empilage (16) vers l'un des première et deuxième distributeurs d'électrodes (111, 141, 151, 112, 142, 152) ; et/ou
le guide de séparateur (125) est configuré de sorte que lorsqu'une première ou une deuxième électrode (1112, 1122) a été agencée sur une partie de la feuille séparatrice (122) et que le premier et le second applicateur d'adhésif (171, 172), respectivement, ont appliqué l'adhésif sur au moins une partie d'une section adjacente (1221, 1222) de la feuille séparatrice (122) et/ou sur ladite électrode (1112, 1122) disposés sur la feuille séparatrice (122), se déplacent le long de la première direction pour couvrir ladite électrode (1112, 1122) disposée sur la feuille séparatrice (122) avec ladite section adjacente (1221, 1222) de la feuille séparatrice (122).

5. Appareil (1) selon une quelconque des revendications précédentes, le premier applicateur d'adhésif (171) et/ou le deuxième applicateur d'adhésif (172) étant chacun configurés pour :
tourner pour orienter l'applicateur de colle respectif (171, 172) par rapport à la feuille séparatrice (122) et/ou au plateau d'empilage (16) ; et/ou
se déplacer dans la première direction et/ou dans une deuxième direction différente de la première direction et de l'axe de rotation du plateau d'empilage (16) pour régler une distance entre l'applicateur d'adhésif respectif (171, 172) et la feuille séparatrice (122) et/ou une distance entre l'applicateur d'adhésif respectif (171, 172) et le plateau d'empilage (16).

6. Appareil (1) selon une quelconque des revendications précédentes, comprenant en outre un ou plusieurs applicateurs côté inférieur (173) configurés pour appliquer un adhésif sur une surface d'une première électrode (1112) et/ou d'une deuxième électrode (1122), ladite surface devant faire face au plateau d'empilage (16) lorsque l'électrode correspondante (1112, 1122) est agencée sur celle-ci, en particulier lorsque :
le distributeur de première électrode (111, 141, 151) et/ou le distributeur de deuxième électrode (111, 141, 151) comprennent chacun un dispositif de positionnement d'électrode (151, 152) configuré pour contenir une première et une deuxième électrodes (1112, 1122), respectivement, et pour placer ladite électrode (1112, 1122) sur le plateau d'empilage (16), un desdits un ou plusieurs applicateurs inférieurs (173) étant configuré pour appliquer l'adhésif sur ladite surface de ladite électrode (1112, 1122) pendant que l'électrode (1112, 1122) est maintenue par ledit dispositif de positionnement d'électrode (151, 152) ; et/ou
le distributeur de première électrode (111, 141, 151) et/ou le distributeur de deuxième électrode (111, 141, 151) comprennent chacun un dispositif de transfert (141, 142) configuré pour transférer une première et une deuxième électrodes (1112, 1122), respectivement, sur une surface de transfert dudit dispositif de transfert (141, 142) vers le plateau d'empilage (16), ladite surface de transfert comprenant une ouverture (141a'), et un desdits un ou plusieurs applicateurs côté inférieur (173) étant configuré pour appliquer l'adhésif sur ladite surface de l'électrode (1112, 1122) à travers ladite ouverture (141a').

7. Appareil (1) selon une quelconque des revendications précédentes, le premier applicateur d'adhésif (171) et/ou le deuxième applicateur d'adhésif (172) étant configuré(s) pour appliquer l'adhésif en appliquant une pluralité de points de l'adhésif et/ou une pluralité de lignes de l'adhésif.

8. Appareil (1) selon une quelconque des revendications précédentes,
le distributeur de première électrode (111, 141, 151) étant ou comprenant une première bobine d'électrode (111) sur laquelle est déroulée une première feuille d'électrode (1111) possédant une pluralité de premières électrodes (1112) formées dessus ;
le distributeur de deuxième électrode (112, 142, 152) étant ou comprenant une deuxième bobine d'électrode (112) sur laquelle est déroulée une deuxième feuille d'électrode (1121) possédant une pluralité de deuxièmes électrodes (1122) formées dessus ;
le distributeur de séparateur (121) étant ou comprenant une bobine de séparateur (121) dans laquelle une feuille séparatrice (122), pliée lors de l'installation de la première électrode (1112) et de la deuxième électrode (1122), recouvre les électrodes (1112, 1122) et est empilée avec les électrodes (1112, 1122), est déroulée ;
le plateau d'empilage (16) étant ou comprenant un plateau (16) sur lequel la première électrode (1112), la deuxième électrode (1122), et la feuille séparatrice (122) sont installées sur la surface supérieure ;
le guide séparateur (125) guidant un sens du pliage de la feuille séparatrice (122) ;
le premier applicateur d'adhésif (171) étant ou comprenant une paire de buses supérieures (171, 172), qui appliquent un adhésif sur au moins une partie de la feuille séparatrice (122) située entre le plateau (16) et le guide séparateur (125) ;
le plateau (16) effectuant un mouvement de rotation alternatif entre la première bobine d'électrode (111) et la deuxième bobine d'électrode (112) ; et
le guide séparateur (125) et la paire de buses supérieures (171, 172) vont et viennent de façon linéaire à gauche et à droite sur la base du plateau (16).

9. Procédé de fabrication d'un ensemble d'électrodes (10) à utiliser dans une batterie, le procédé comprenant les étapes suivantes :
agencement d'une première section (1221) d'une feuille séparatrice continue (122) sur un plateau d'empilage (16) ;
agencement d'une première électrode (1112) sur ladite première section (1221) de la feuille séparatrice (122) à l'aide d'un premier distributeur d'électrode (111, 141, 151) ;
application d'un adhésif sur au moins une partie d'une deuxième section (1222) de ladite feuille séparatrice (122) et, en option, sur ladite première électrode (1112) à l'aide d'un premier applicateur d'adhésif (171) ; et
pliage de ladite feuille séparatrice (122) pour couvrir ladite première électrode (1112) disposée sur la première partie (1221), ladite deuxième section (1222) de la feuille séparatrice (122) avec l'adhésif étant disposée entre ladite première électrode (1112) et ladite deuxième section (1222), la feuille séparatrice (122) étant pliée à l'aide d'un guide séparateur (125) pour guider la feuille séparatrice (122),
le plateau d'empilage (16) étant mis en rotation depuis le premier distributeur d'électrode (111, 141, 151) vers un deuxième distributeur d'électrode (112, 142, 152) pour distribuer une deuxième électrode (1122) tout en appliquant l'adhésif et/ou en pliant ladite feuille séparatrice (122),
la première électrode (1112) étant agencée sur la première section (1221) de la feuille séparatrice (122) tout en appliquant l'adhésif sur ladite partie de la deuxième section (1221) de la feuille séparatrice (122).

10. Procédé selon la revendication 9, dans lequel, après avoir plié ladite feuille séparatrice (122) pour couvrir ladite première électrode (1112), le procédé comprend en outre :
l'agencement d'une deuxième électrode (1122) sur ladite deuxième section (1222) de la feuille séparatrice (122) à l'aide du deuxième distributeur d'électrode (112, 142, 152) ;
l'application d'un adhésif sur au moins une partie d'une troisième section (1221) de ladite feuille séparatrice (122) et/ou sur ladite deuxième électrode (1122) à l'aide d'un deuxième applicateur d'adhésif (172) ; et
pliage de ladite feuille séparatrice (122) pour couvrir ladite deuxième électrode (1122) disposée sur la deuxième partie (1222), ladite troisième section (1221) de la feuille séparatrice (122), l'adhésif étant disposé entre ladite deuxième électrode (1122) et ladite troisième section (1221), la feuille séparatrice (122) étant pliée à l'aide du guide séparateur (125) pour guider la feuille séparatrice (122),
en particulier :
le plateau d'empilage (16) étant mis en rotation depuis le distributeur de deuxième électrode (112, 142, 152) vers le distributeur de première électrode (111, 141, 151) tout en appliquant l'adhésif à l'aide du deuxième applicateur d'adhésif (171) et/ou tout en pliant ladite feuille séparatrice (122) pour couvrir ladite deuxième électrode (1122) ; et/ou
la deuxième électrode (1122) étant agencée sur la deuxième section (1222) de la feuille séparatrice (122) tout en appliquant l'adhésif sur ladite partie de la troisième section (1221) de la feuille séparatrice (122).

11. Procédé selon la revendication 9 ou 10,
le procédé comprenant en outre le déplacement dudit guide séparateur (125), du premier applicateur d'adhésif (171) et/ou du deuxième applicateur d'adhésif (172) entre le distributeur de première électrode (111, 141, 151) et le distributeur de deuxième électrode (112, 142, 152) dans une première direction différente d'un axe de rotation du plateau d'empilage (16), en particulier l'adhésif appliqué à l'aide du premier applicateur d'adhésif (171) étant appliqué tandis que le guide de séparation (125) et/ou le premier applicateur d'adhésif (171) se déplace vers le distributeur de deuxième électrode (112, 142, 152) et/ou l'adhésif appliqué à l'aide du deuxième applicateur d'adhésif (172) étant appliqué tandis que le guide de séparateur (125) et/ou le deuxième applicateur d'adhésif (172) se déplacent vers le distributeur de première électrode (111, 141, 151) ; et/ou
le procédé comprenant en outre la rotation du premier applicateur d'adhésif (171) et/ou du deuxième applicateur d'adhésif (172) pour orienter l'applicateur d'adhésif respectif (171, 172) relativement à la feuille séparatrice (122) et/ou au plateau d'empilage (16), et/ou le déplacement du premier applicateur d'adhésif (171) et/ou du deuxième applicateur d'adhésif (172) dans une direction différente de l'axe de rotation du plateau d'empilage (16) pour ajuster une distance entre l'applicateur d'adhésif respectif ( 171, 172) et la feuille séparatrice (122) et/ou une distance entre l'applicateur d'adhésif respectif (171, 172) et le plateau d'empilage (16).

12. Procédé selon une quelconque des revendications 9 à 11,
le procédé comprend la découpe d'une première feuille d'électrode (1111) déroulée d'une première bobine d'électrode (111) pour former une pluralité de premières électrodes (1112) ;
l'étape d'agencement de ladite première partie (1221) de la feuille séparatrice (122) comportant ou comprenant l'installation de la feuille séparatrice (122) déroulée d'une bobine séparatrice (121) sur un plateau le long d'un guide séparateur (125) ;
le procédé comprenant l'application d'un adhésif sur une partie inférieure de la première électrode (1112) depuis une buse inférieure ;
l'étape d'agencement de la première électrode (1112) sur ladite première section (1221) de la feuille séparatrice (122) comportant ou comprenant l'installation de la première électrode (1112) sur une première zone (1221) de la feuille séparatrice (122) ;
l'étape d'application dudit adhésif sur ladite partie de la deuxième section (1222) de la feuille séparatrice et/ou sur ladite première électrode (1112) comportant ou comprenant l'application de l'adhésif sur au moins une partie d'une deuxième section (1222) de la feuille séparatrice (122) depuis une première buse supérieure (171) ; et
l'étape de pliage de ladite feuille séparatrice (122) pour couvrir ladite première électrode (1112) comportant ou comprenant le pliage de la feuille séparatrice (122) dans un sens de pliage guidé par le guide séparateur (125), de sorte que la deuxième section (1222) de la feuille séparatrice (122) appliquée avec l'adhésif recouvre la première électrode (1112).

13. Ensemble d'électrodes (10) à utiliser dans une batterie, l'ensemble d'électrodes (10) comprenant une pluralité de premières électrodes (1112) et une pluralité de deuxièmes électrodes (1122),
les premières et deuxièmes électrodes (1112, 1122) étant tour à tour empilées et séparées l'une de l'autre par une feuille séparatrice (122), qui est pliée entre les premières et deuxièmes électrodes (1112, 1122) en forme de zigzag ; et
un adhésif étant disposé entre la feuille séparatrice (122) et les premières électrodes (1112) et/ou entre la feuille séparatrice (122) et les deuxièmes électrodes (1122), une partie ou l'intégralité dudit adhésif étant disposée en une pluralité de points et/ou lignes, l'adhésif étant disposé, pour une partie ou l'intégralité des premières et deuxièmes électrodes, entre 5 et 20 lignes et/ou entre 10 et 200 points entre une surface de l'électrode correspondante et la feuille séparatrice.

14. Ensemble d'électrodes (10) selon la revendication 13,
l'adhésif couvrant, pour une partie ou l'intégralité des premières et deuxièmes électrodes (1112, 1122), entre 0,01 % et 50 %, de préférence entre 2 % et 20 %, d'une section transversale d'une surface de contact entre la feuille séparatrice (122) et l'électrode correspondante (1112, 1122) ; et/ou
au moins une partie dudit adhésif ayant été disposée entre la feuille séparatrice (122) et les premières et/ou les deuxièmes électrodes (1112, 1122) en appliquant l'adhésif sur une surface de l'électrode respective (1112, 1122) avant de disposer ladite surface sur la feuille séparatrice (122) et/ou de recouvrir ladite surface avec la feuille séparatrice (122), une partie ou l'intégralité dudit adhésif ayant été disposée entre la feuille séparatrice (122) et les premières et/ou deuxièmes électrodes (1112, 1122) en appliquant l'adhésif sur une première surface de l'électrode respective (1112, 1122) avant de disposer ladite première surface sur la feuille séparatrice (122) et d'appliquer l'adhésif sur une partie (1221, 1222) de la feuille séparatrice (122) avant de couvrir une deuxième surface de l'électrode respective (1112, 1122) située face à la première surface avec ladite partie (1221, 1222) de la feuille séparatrice (122).

15. Cellule de batterie comprenant un ensemble d'électrodes (10) selon la revendication 13 ou 14, et un boîtier de batterie (50) contenant l'ensemble d'électrodes (10) ainsi qu'une solution électrolytique, l'adhésif ayant été dissous dans la solution électrolytique au moins en partie.
